# EUROPEAN PATENT APPLICATION

(11) **EP 0 838 774 A2**
(43) Date of publication of application: **29.04.1998**
(21) Application number: 97118452.8
(22) Date of filing: 23.10.1997
(51) Int. Cl.: G06F 17/60

(54) **Electronic document delivery system**

(30) Priority: 24.10.1996 US 738966; 30.01.1997 US 792171; 14.02.1997 US 800864
(71) Applicant: Tumbleweed Software Corp., Redwood City, CA 94063 (US)
(72) Inventor: Smith, Jeffrey C., Menlo Park, CA 94025 (US); Bandini, Jean-Christophe, Cupertino, CA 95014 (US)
(74) Representative: DIEHL GLAESER HILTL & PARTNER

(57) **Abstract**

A document, preferably in a portable format, is forwarded to a remote server (*e.g.* using HTTP to 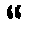 push 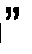 the document to the server). The server sends a generic notification of the document to an intended recipient, and the recipient can download the document from the server using local protocols. A method and system is also provided that sends documents from a desktop computer inside an intranet through a series of firewalls and/or proxy servers to a server residing on the Internet. A computer in an intranet system protected by a firewall or proxy server uses a software application to access the Internet. The software also encodes binary data to be sent as text. This binary data may be subdivided into smaller text packets. The text packets are sent, using HTTP, to a server outside the firewall, which has been configured to accept such text packets. The server converts the text packets back to the original binary data representation. The binary data, once resident on the internet server, can then be forwarded directly to other internet servers, internet desktop computers, printers, or fax machines. A document delivery server is also provided that dynamically customizes the format of a document to be delivered, based on the capabilities of the recipient and the type of document to be delivered. The server attempts to maintain the information contained in the document in a high level representation and deters the decision of when to convert to a lower level representation, thereby maximizing the potential set of options and function at each step in the delivery process.

## Description

The invention relates to the field of computer networks. More particularly, the invention relates to techniques for the delivery of electronic documents to users over the Internet.

The development of computerized information sources, such as those provided through the Internet or other on-line sources, has led to a proliferation of electronically available information. Currently, a user who subscribes to the Internet manually navigates through the Internet to visit sites which may or may not be of interest.

An inherent problem in this Internet system is that the available information is distributed through a 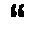 pull 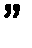 type infrastructure, where the user who wants to receive information must manually search sites of interest, or use a finder application, to search and download appropriate information. For a user who wishes to publish and distribute information or documents, either an individual or a larger entity that has information that is desired to be distributed, the present 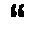 pull 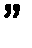 system doesn't allow the freedom to send and distribute to a recipient or group of recipients, in a 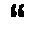 push 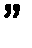 fashion.

Facsimile technology is widely used at the present time for the distribution of simple documents, but has numerous drawbacks, including lower quality printed documents, costly and bulky paper copies (particularly if the recipient doesn't care to have a paper copy), loss of content (e.g. text and graphics can't be edited or manipulated), and time requirements for transmission, particularly for long or complex documents.

Electronic Mail (E-mail) provides a means for sending electronic messages from computer user to another. E-mail has advantages of convenience, format and storage of messages for later retrieval. As such, E-mail has been accepted and widely used for basic communication. E-mail is typically an ASCII based format, however, and proves to be very limiting for the communication of long or formatted documents. As well, E-mail is not the medium of choice for the distribution of complex documents, such as reports, articles, advertisements and art which can include page layout grids, postscript-formatted objects, multiple fonts with tracking and kerning, graphics, imbedded tables and spreadsheets, and other complicated information. Some E-mail systems provide a means for appending an ASCII based E-mail message with an associated file, to be downloaded along with the E-mail message. Most systems that allow the appending of an associated file are designed to allow a single user to send unsecured files to an associate or friend, and neither allow for controlled automated distribution to multiple recipients, nor do they provide advanced accounting, billing or other such features (e.g., receipt notification). E-mail gateways also limit the applicability of attachments, and do not solve the problems of security and receipt notation or acknowledgment.

C. Baudoin, *Interenterprise Electronic Mail Hub,* U.S. Patent No. 5,406,557 (11 April 1995) discloses an interenterprise communications center, which has a computer hub comprising a common core and a plurality of input and output modules. The input modules connect to a first end user, and convert a message sent by the first end user into a universal format. The hub core queues the message and forwards it to the output module for conversion into the format of the destination user. While the disclosed hub discloses techniques to relay simple e-mail messages, it is designed to convert the e-mail message formats, thus losing the integrity of the original text-based file.

The disclosed prior art systems and methodologies thus provide some methods for the delivery of documents, but fail to provide an economical, fast document delivery system that operates in a push-fashion, while conserving the integrity of the original electronic file. The development of such an electronic document delivery system would constitute a major technological advance. In addition, the ability to distribute electronic portable high-quality documents to many recipients in a controlled, economical and accountable fashion would constitute a further technological advance.

The Internet is increasingly being used for communications. It is now possible on the Internet for a sender to direct a document to a specific recipient, regardless of platform, operating system, or email system. Such communication is possible even when the recipient is not a computer but, rather, a fax machine or printer connected to the Internet.

In many instances, the sender of a document will reside on a local area network, referred to as an intranet. The sender's computer may be connected to the Internet directly, or through the intranet's server. An intranet is frequently protected and insulated from the Internet by a firewall or proxy server. A firewall is software and/or hardware which limits access to an intranet or a desktop computer. A proxy server is dedicated software and/or hardware which intercepts requests between machines running inside an intranet and machines outside the intranet.

Such firewall provides one or more of a few basic services. First, a firewall prevents intranet users from accessing specific information on the Internet. Thus, an office worker is restricted from accessing non-work-related Internet sites. Second, a firewall restricts outside access to the information available on the intranet. Third, a firewall prevents intranet users from sending confidential information from the intranet to the Internet. Typically, blocking unsolicited outside access to the intranet also blocks information transfer from intranet to Internet.

Various methods have been used to transfer data on the Internet between intranets protected by firewalls. One such method is the key management scheme described in *Aziz*, Method and Apparatus for Key-Management Scheme for Use With Internet Protocols at Site Firewalls, U.S. Patent No. 5,416,842 (16 May 1995). In this method, intersite traffic is encrypted at the Internet Protocol (IP) layer by using a Skip scheme to prevent detection of a source and destination address of a communicating node.

IP packets are encrypted only from site firewall to site firewall, such that only firewall servers need to participate in the Skip scheme. When a firewall receives from an interior site node an IP packet intended for a remote firewall, it encrypts the IP packet and sends it encapsulated in another IP packet destined for the remote firewall. The remote firewall decrypts the encapsulated packet and sends it in the clear to the destination node on the interior side of the remote firewall.

Such method, however, requires the encrypted IP packet to be received by a remote firewall server that is configured to decrypt the packet. The encrypted information cannot be directly sent to a computer or intranet system that does not use such firewall server, or to a device such as a fax machine or printer.

A security system for connecting computer networks is described in *Gelb*, Security System for Preventing Unauthorized Communications Between Networks by Translating Communications Received in IP Protocol to Non-IP Protocol to Remove Address and Routing Services Information, U.S. Patent No. 5,550,984 (27 August 1996). However, *Gelb* does not address how documents may be sent through a firewall or proxy server.

It would therefore be an advantage to provide a method and system for sending documents through a series of firewalls and/or proxy servers. It would be a further advantage if such method and system permitted the documents to be transmitted to a device such as a fax machine or a printer. It would be yet another advantage if such method and system did not require the receiving computer of device to be served by a decrypting firewall.

One of the many complexities associated with delivering information between two disparate systems stems from basic incompatibilities between those systems including, for example, differences in capabilities. A printer has a very different set of capabilities than a personal computer, and a commensurate set of data formats which the printer might accept. A personal computer, for example, might be capable of processing a WordPerfect document, a portable document (*e.g.* Adobe Acrobat or Novell Envoy), or an HTML document. A printer, by contrast, might only be capable of accepting a PCL file or a Postscript file. A fax machine, as with a printer, may only accept a Group 3 compressed black and white raster representation of a document. Thus, various devices have various capabilities in terms of the types of data they may accept.

Similarly, different data types offer different levels of flexibility and function. For example, an Envoy or PDF file can be scaled to any resolution, can support millions of colors, and can include text and fonts. A Group 3 compressed fax image, on the other hand, is limited in resolution, only supports black and white colors, and includes no text or fonts, thereby limiting the ability of a recipient of a Group 3 compressed image to perform any operations, except for rudimentary operations.

The extended flexibility of a more robust data representation, such as a portable document, enables such documents to be converted to less robust representations. By illustration, a portable document might be converted to a Postscript file or even a Group 3 compressed image. One might therefore suggest that a portable document is a high level data representation and a Group 3 compressed image is a low level data representation.

In most cases, if the recipient system is capable of receiving a high level data representation, such representation is the data representation of choice due to the increased capabilities such representation provides. Thus, such representation offers a preferred common format, especially if such representation includes a mechanism that can convert the high level representation to a lower level representation as necessary.

M. Williams, R. Yun, *Method and Apparatus For Enhanced Electronic Mail Distribution*, U.S. Patent No. 5,424,724 (13 June 1995) disclose a method and apparatus for enhanced electronic mail distribution which permits distribution of electronic mail documents to multiple host systems and/or external networks via a single host agent. A host agent reference table is established at selected host agents within a local network. Each host agent reference table includes an identification of selected destination nodes associated with an identified host agent for those nodes. A referral to the host agent reference table is used to determine the appropriate host agent for an electronic document destined for a selected node. No provision is made within this method and apparatus for dynamic data conversion. Thus, documents are delivered with its level of representation unaltered and without regard for processing capability at a destination node.

T. Schultz, A. Gross, B. Pappas, G. Shifrin, L. Mack, *Apparatus and Method of Distributing Documents To Remote Terminals With Different Formats*, U.S. Patent No. 4,754,428 (28 June 1988) and T. Schultz, A. Gross, B. Pappas, G. Shifrin, L. Mack, *Electronic Mail*, U.S. Patent No. 4,713,780 (15 December 1987) disclose a method and apparatus for delivering a document originated at a local site by a source having a printer output that is normally connected to a printer, to one or more remote locations having printers or display devices that may differ from the printer normally connected to the printer output of the document generating source. Printer command signals which are normally provided at the printer output are converted to character and position data which represent the respective characters and their horizontal and vertical positions on each page of the document. The character and position data are transmitted to a remote location and reconverted to a form for driving a printer or other display device to produce a line-for-line conforming copy of the original.

The '428 and '780 patents disclose the use of upstream data conversion, but do not provide downstream data conversion. That is, the '428 and '780 patents disclose a method and apparatus that allows text to be sent to a printer and converted to a printer specific format. However, such method and apparatus lacks the ability to start with a high-level representation of the data, and only convert to a lower level representation if such conversion is determined to be necessary. Thus, such approach is not satisfactory where printer format is not known or established prior to document origination, or where a heterogeneous network, such as the Internet, is used to deliver data.

L. Harkins, K. Hayward, T. Herceg, J. Levine, D. Parsons, *Network Having Selectively Accessible Recipient Prioritized Communication Channel Profiles*, U.S. Patent No. 5,513,126 (30 April 1996) discloses a method for a sender to automatically distribute information to a receiver on a network using devices and communications channels defined in a receiver profile. The receiver profile establishes the properties and mode for receipt of information for receivers on the network and the profile is published in a network repository for all network users or is accessible for selected groups or individuals on the network. The disclosed network does not provide for data conversion, but rather involves sending predetermined data based on the capabilities of the recipient which are communicated through channels. Thus, each recipient must first establish a format before data are exchanged.

M. Bloomfield, *Sender-Based Facsimile Store and Forward Facility*, I.S. Patent No. 5,404,231 (4 April 1995) discloses a system that provides sender-based store and forward services for delivering facsimile based information. The system is solely concerned with the delivery of facsimile bitmap images, and not with data conversion.

In view of the limitations attendant with the state of the art, it would be advantageous to provide a system in which the ability to descend to a lower level representation is preserved to allow the flexibility to do so at a future point in time, but that also enables a richer set of functions as appropriate.

The present invention intends to overcome the above problems. The object is solved by the apparatus according to independent claims 1, 13 and 36, the method according to independent claims 7, 15, 57 and 66 and the system of binary data delivery according to independent claim 69.

Further advantages, features, aspects and details of the invention are evident from the dependent claims, the description and the accompanying drawings. The claims are intended to be understood as a first, non-limiting, approach of defining the invention in general terms.

The present invention generally relates to the field of computer networks. In particular it relates to techniques for the delivery of electronic document to users over the internet.
It is an object of the invention to provide an electronic document delivery system and methods of its use.

A document, preferably in a portable format, is forwarded to a remote server (*e.g.* using HTTP to 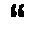 push 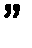 the document to the server). The server sends a generic notification of the document to an intended recipient, and the recipient can download the document from the server using local protocols. In preferred embodiments, the invention is used for the controlled delivery of portable documents, from a sender to a large number of recipients, using a network of servers that route the documents and notifications in a store and forward manner, while providing routing and accounting information back to the sender.

According to a further aspect, the invention also provides a method and system for sending documents from a desktop computer inside an intranet through a series of firewalls and/or proxy servers to a server residing on the Internet. Firewalls presume that HTTP for textual data is a valid operation that allows users to fill in HTML forms. Thus, firewalls do not block HTTP for textual data. The invention circumvents the security provided by firewalls by using this Ifeature of HTTP to move a document through the firewall.

A computer in an intranet system protected by a firewall or proxy server uses a software application to access the Internet. The software also encodes binary data to be sent as text. This binary data may be subdivided into smaller text packets. The text packets are sent, using HTTP, to a server outside the firewall, which has been configured to accept such text packets. The server converts the text packets back to the original binary data representation. The binary data, once resident on the internet server, can then be forwarded directly to other internet servers, internet desktop computers, printers, or fax machines.

The invention provides in a further aspect a document delivery server which dynamically customizes the format of a document to be delivered, based on the capabilities of the recipient and the type of document to be delivered. The server thereby enables the transparent delivery of formatted documents, regardless of the capabilities of the recipient. For example, the recipient platform could be a desktop computer, a network computer, a printer, a fax machine, or a personal digital assistant. The server attempts to maintain the information contained in the document in a high level representation and defers the decision of when to convert to a lower level representation, thereby maximizing the potential set of options and function at each step in the delivery process. Accordingly, the invention starts with a high-level representation of data, and only converts to a lower level representation if necessary.

According to still another aspect a method and apparatus is provided in which a document preferably in a portable format, is forwarded to a remote server (*e.g.* using HTTP to 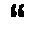 push 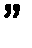 the document to the server). The server sends a generic notification of the document to an intended recipient, and the recipient can download the document from the server using local protocols.

A method and system is also provided that sends documents from a desktop computer inside an intranet through a series of firewalls and/or proxy servers to a server residing on the Internet. A computer in an intranet system protected by a firewall or proxy server uses a software application to access the Internet. The software also encodes binary data to be sent as text. This binary data may be subdivided into smaller text packets. The text packets are sent, using HTTP, to a server outside the firewall, which has been configured to accept such text packets. The server converts the text packets back to the original binary data representation. The binary data, once resident on the internet server, can then be forwarded directly to other internet servers, internet desktop computers, printers, or fax machines.

A document delivery server is also provided that dynamically customizes the format of a document to be delivered, based on the capabilities of the recipient and the type of document to be delivered. The server attempts to maintain the information contained in the document in a high level representation and defers the decision of when to convert to a lower level representation, thereby maximizing the potential set of options and function at each step in the delivery process.

The invention will be better understood by reference to the following description of embodiments of the invention taken in conjection with the accompanying drawings, wherein:
Figure 1 is a block diagram which depicts a binary file delivery system using one binary file server;
Figure 2 is a block diagram which depicts a binary file delivery system using two binary file servers;
Figure 3 is a block diagram which illustrates key elements of a store item;
Figure 4 is a schematic depiction of !he binary file delivery server;
Figure 5 provides an example of the architecture of one embodiment of the binary file server;

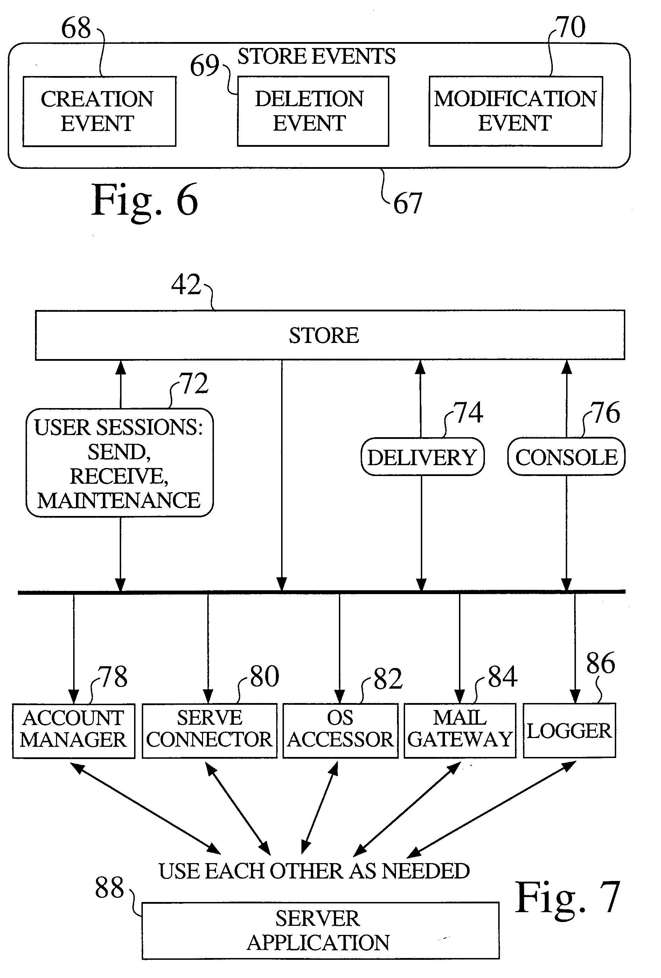

Figure 6 illustrates different types of store events employed by the binary file delivery server;
Figure 7 is a block diagram of the specific components within the binary file delivery server architecture;
Figure 8 provides a block diagram illustrating of the architecture of the store;
Figure 9 illustrates how the user session organizes internet clients into three layers, including sessions, transactions, and transports;
Figure 10 illustrates the non-interactive tasks of a delivery, once the send session has created a store item or another server is forwarding a store item;
Figure 11 provides details of the account manager architecture;
Figure 12 provides details of the logger architecture;
Figure 13 provides details of the server connector architecture;
Figure 14 provides a functional block diagram which depicts a portable document delivery system using one portable document delivery server;
Figure 15 provides a functional block diagram which depicts a portable document delivery system using two portable document delivery servers;
Figure 16 illustrates how a portable document send client application and a portable document receive client application are used in the invention;
Figure 17 illustrates how a server configuration user interface application is used in the invention;
Figure 18 illustrates how a document can be sent by the fax gateway of a server to a printer;
Figure 19 illustrates how a document can be sent by the department gateway of a dedicated corporate server through a LAN to a department printer;
Fig. 20 is a schematic diagram of the system for transmission of data across a firewall and/or proxy server, according to the invention;
Fig. 21 an exemplary flow chart illustrating the algorithm for transmission of data across a firewall and/or proxy server, according to the invention;
Fig. 22 is an exemplary flow chart of the set of operations necessary to transfer a native file across a firewall and/or proxy server, according to the invention;
Fig. 23 is a block schematic diagram that shows an example of an application involving a dynamic document conversion server according to the invention;
Fig. 24 is a block schematic diagram that shows another example of an application involving the dynamic document conversion server according to the invention; and
Fig. 25 is a block schematic diagram showing a presently preferred implementation of the dynamic data conversion server according to the invention.

The binary file delivery system 10 enables corporations, publishers and individuals to distribute documents electronically. Importantly, unlike existing Web based document publishing technologies, the binary file delivery system 10 allows the directed and secure distribution of documents. The Web could currently be characterized as a pull-publishing environment, where the consumer of documents must find and retrieve documents from a server. Push-publishing, by contrast, allows the producer of a document to direct the delivery of documents to consumers. Facsimile (fax), the postal service, and electronic mail (E-mail) are all examples of push-publishing.

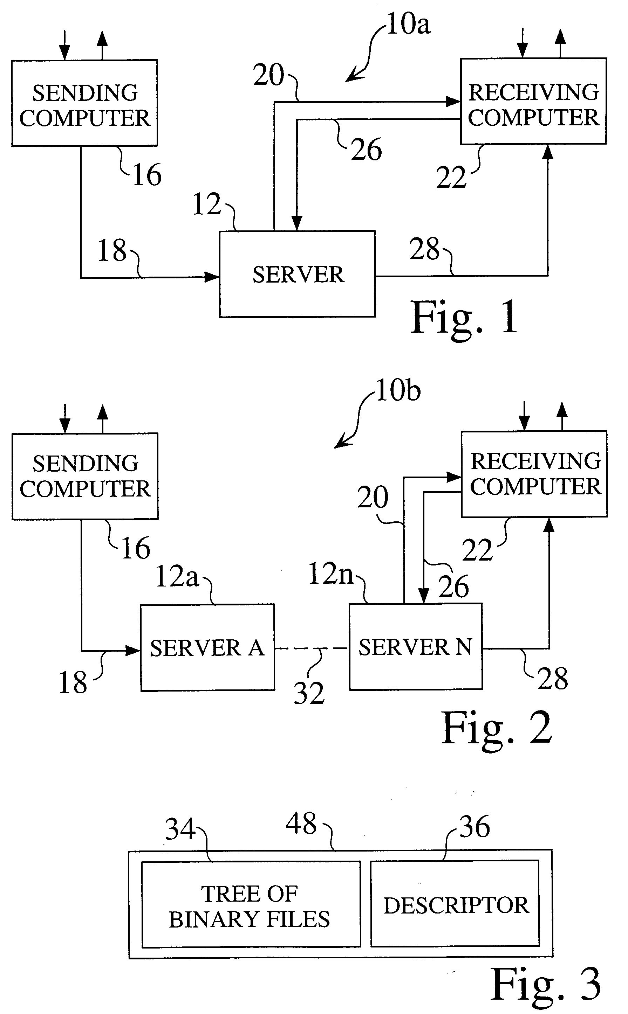

Figure 1 is a block diagram which depicts a binary file delivery system 10 using one binary file server 12. The binary file delivery system 10 allows users to push documents, enabling the producer of documents to direct where those documents will go. One way that the binary file delivery system 10 achieves push-publishing is by combining HTTP, which is usually implemented to pull information over a network, with SMTP (which only supports text). Additionally, the binary file delivery system 10 provides a host of services to facilitate the various applications of directed document delivery. At one level, the binary file delivery system 10 can be characterized as a new generation of facsimile technology, which utilizes networks instead of telephone lines, and moreover, introduces support for new document representations vastly superior to existing fax formats. At another level, the binary file delivery system 10 is a general purpose document delivery server capable of supporting massive amounts of documents and transactions. In all cases, the binary file delivery server 10 provides a complete and robust solution for document delivery.

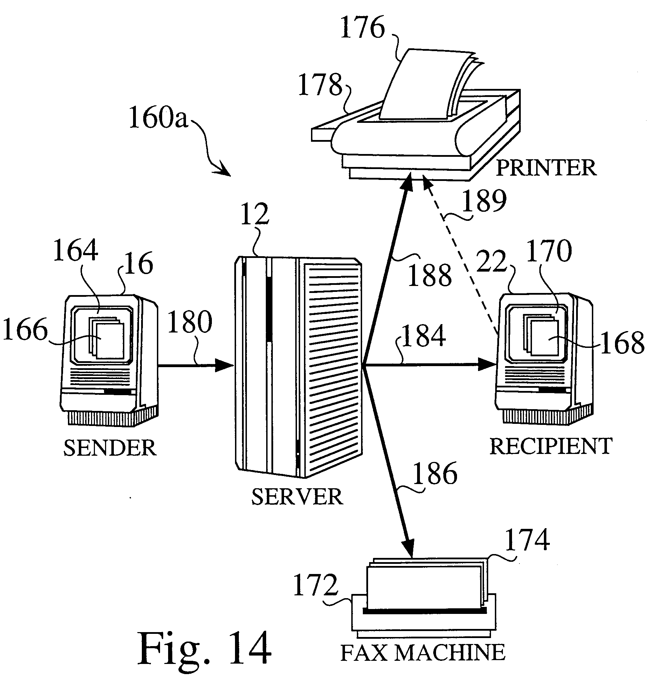

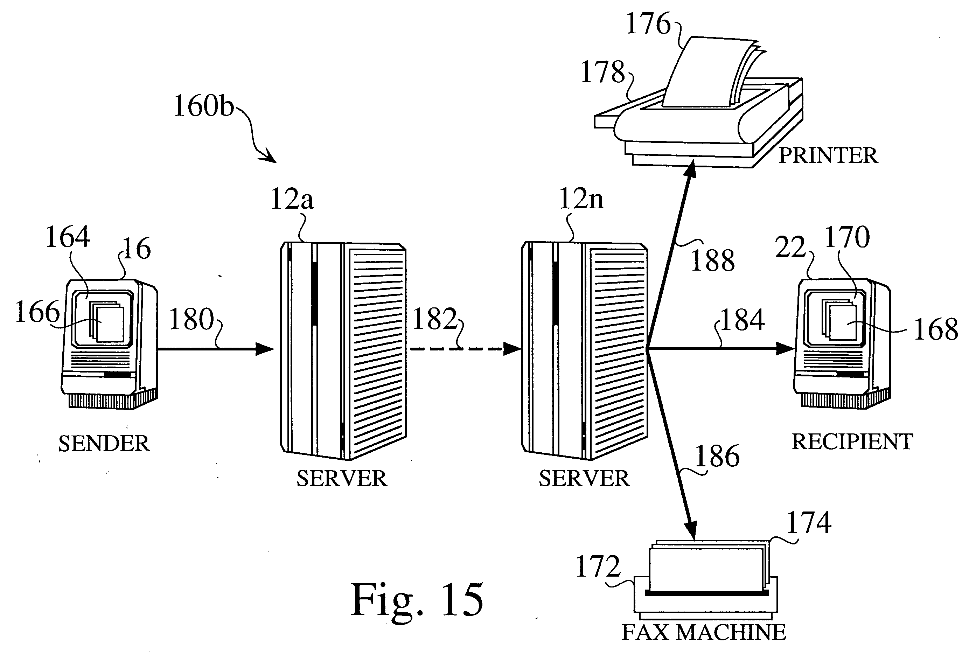

The binary file delivery server 10 is used for sending a set of binary files from one end-point to one or multiple end-points. An endpoint is typically a recipient 22 with Internet access, but can also be another entity, such as a facsimile machine 172 or a printer 178 (Figs. 14, 15). The delivery of binary files is accomplished in a reliable, accountable, and tractable manner. The binary file delivery system 10 provides several levels of security for the directed files, from E-mail equivalent security, to better than facsimile or physical mail. The system also provides user account management including the credit and debit of billing accounts. The system can also cooperate between multiple binary file delivery servers 12, which may or may not be controlled by some other authority. Figure 2 depicts a binary file delivery system using two binary file servers 12a and 12n, which communicate across an Internet.

The binary file delivery server 12 operates in three primary modes, which include a public mode, where senders 16 set up their accounts 132 themselves and are subject to billing, a private mode, where senders 16 are controlled by an administrator, and billing is more an internal accounting issue than a collection issue, and a publishing mode, where there are many recipients 22, but few senders 16.

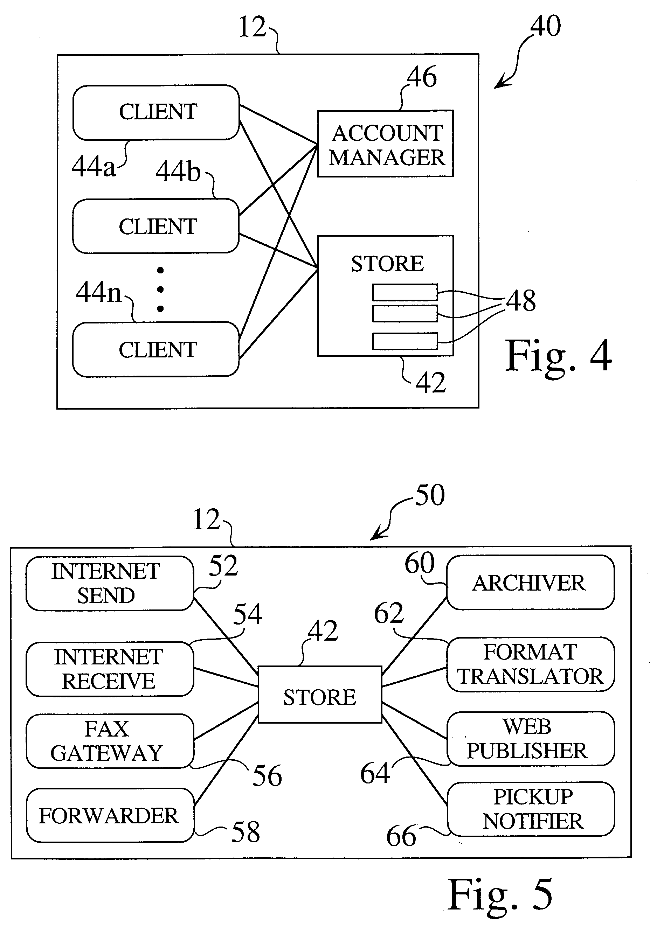

The binary file delivery server 12 is comprised of separate functional components, and are not necessarily processes or shared libraries. The binary file delivery server 12, shown schematically in Figure 4, includes an intelligent storage compartment called a store 42, which is augmented by a set of clients 44a -44n, called store clients 44, which use the store methods and listen to the store events, but do not interact with or know about other clients 44. An account manager 46 component is a shared service that keeps information about the sender 16. The design also incorporates information about recipients 22 for the case of a receive application (as opposed to e-mail notification).

The client/server general architecture provides a better extensibility than a more pipelined structure. It also decouples the store clients 44 from each other, which can be useful in the context where some tasks are interactive, while others are more background oriented.

### The Store.

The store 42 contains a set of store items 48. As shown in Figure 3, a store item 48 includes a tree of binary files 34 and a descriptor 36, which is a set of store-defined and client-defined attributes. The tree of binary files 34 can be viewed as part of the store-defined attributes.

The bile storage system provides the following functionality:
1) Permanent storage of Store items 48 (*e.g.* the binary file tree 34 contained in a store item 48 is written to disk)
2) Client read/write access to the descriptor 36, which is made up of store-defined and client-defined attributes (*e.g.* a client 44 can write the expiration date of a store item 48)
3) Client notification of store events 67 (*e.g.* clients 44 can be notified of the creation event 68 of a new store item 48)
4) Internal management according to store defined attributes (*e.g.* store item expiration date generates an event).

The store 42 provides access to the store items 48 and generates store events 67, wherein store items 48 have store-defined attributes such as ID, creation date, file count, file names, file data, and store events 67 can be listened to by the clients 44. Store events 67 may include the creation 68, deletion 69 or modification 70 of a store item 48. The events 67 play a crucial role in the architecture, since this defines how the clients 44 synchronize their work with a very limited knowledge of the other.

### Store Clients.

Store clients 44 can be of a wide variety, and specific clients will be detailed further. In this framework, a store client 44 is some component which uses some of the store methods and or listens to some of the store events 67 to perform useful tasks on the store items 48.

### Account Manager.

The account manager 46 provides read/write access to user and billing accounts, and is used by clients 44 or other components of the system 10. The store 42 does not use or know about the accounts.

### Other Components.

Other components used by the store clients 44 and the store 42 itself are implemented within the architecture of the system. For example, inter-server communication, log management, and other administrative services, which is discussed below.

Figure 5 provides an example of the architecture of one embodiment of the binary file server 42, including client 44 modules (52-66) that are used to implement server functions. The Internet Send 52 is used to create store items 48 and fills in the attributes. The Internet Receive 54 opens existing store items 48 and can be used to modify their attributes. A Fax gateway 56 listens to the creation events 68 generated by the store 42, processes relevant store items 48, and then deletes them from the store 42. A forwarder 58 listens to the creation events 68 generated by the store 42, and then examines the attributes of the new store items 48, and decides if forwarding is necessary. An archiver 60 listens to deletion events, and copies the store item 48 to secondary private storage before deletion occurs. The format translator 62 listens to creation, examines attributes, and if translation is needed, it reads, processes and writes back the files in the store item 48. The web publisher 64 listens to the creation events 68 and checks if the store item attributes specified a Web publishing, and if so, read the attributes as necessary. A pickup notifier 66 listens for a creation event 68, and then notifies recipients 22.

### Security Issues for Internet-based Users.

While the Binary File Delivery System 10 offers the flexibility to support specialized security solutions, it readily supports current industry-standard security solutions, including:
a) secure server interconnect and server authentication (available with SSL 2.0, which is built into the servers (HTTP);
b) secure Server-to-Server (on top of SSLX);
c) support end-points private key (the private key has to be exchanged by the users using their own channels.
d) support end-points public key, using CryptoAPI or the standard user public key. The system can also help the user generate a public key for BFD-use only, and update user account information with it, so that the sender does not have to communicate directly with the recipient to get the public key; and
e) Client Authentication by the server with SSL and MS PCT (End user can get their own certificate and be authenticated by the servers).

An important aspect of the binary file delivery server 12 is that it handles multiple requests in parallel and minimizes the response time for most requests. Therefore, synchronization issues are important, for both correctness and system performance. Performance is enhanced by minimizing synchronized data access, deferring to asynchronous processing whenever possible, and by using multitasking and Inter-Process Communication (IPC) for the platform. One embodiment of the server 12 relies heavily on threading, which provides low overhead multitasking within one process, and leverages multiprocessor capabilities when available. The IPC on this embodiment uses named pipes, in addition to mail slots or Remote Procedure Call (RPC).

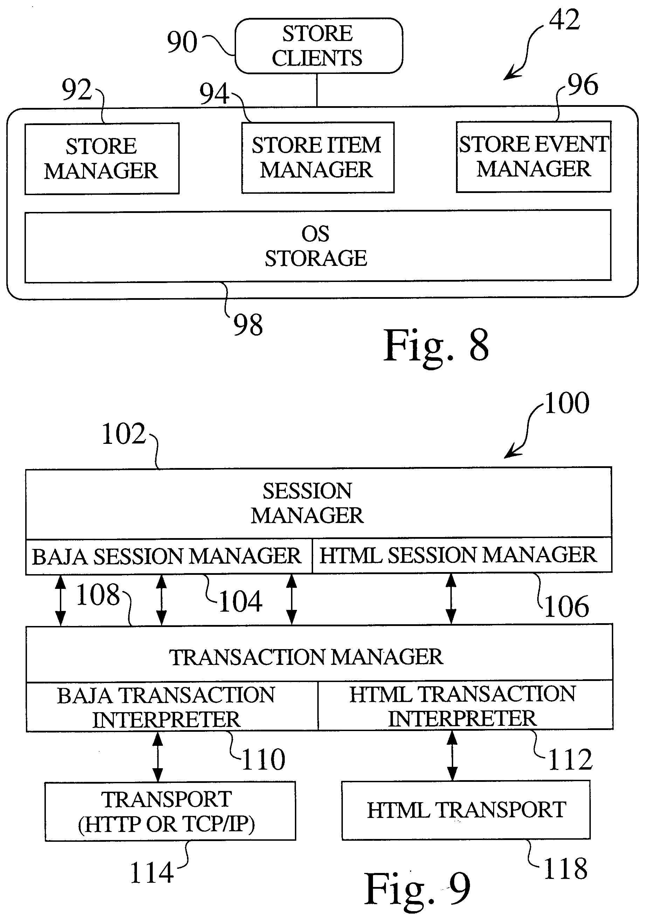

Figure 7 provides a block diagram of the specific components within the binary file delivery server 12 architecture.

The user session 72 handles send sessions, receive sessions (which are implemented when the user is using a BFD desktop application 192, 198), HTML receive sessions (which are implemented through an HTML browser, as opposed to when the user is using the BFD desktop 164 (note that a BFD desktop session may go through HTML)), maintenance sessions (which implement the account setup and maintenance sessions (*e.g.* notification downloads, account setting modifications (not to be confused with console services by an administrator, as opposed to an end user of a public server), HTML maintenance sessions (which implement the account setup and maintenance through an HTML browser).

A delivery component 74 implements the background work of making a delivery, including notification and forwarding. A console 76 is used to implement administration sessions, which are conducted through an HTML interface instead of a specialized user interface. The console 76 provides a user interface to browse and modify all the server properties, including accounts, logging, performance, and parameter settings.

### Shared Components.

Shared components may be used by the store 42, by any of the store clients 44, or they may operate on their own. While they do not listen to store events 67, they can use store methods, as needed, for efficiency, such as for connector receive). Shared components may include:
1) An account manager which maintains all local account information and provides a unique access interface to local accounts, including billing account and remote account information;
2) a server connector 80, which handles all inter-server communications;
3) a mail gateway 84, which handles the sending and receiving of bounced mail;
4) a logger 86, which manages access read/write to the different logs which are classified by a type. The most important log is the send/receive transaction log, which tracks what happens to store items 48 over time; and
5) an operating system accessor 82, which provides a platform independent interface to the operating system for file input and output (I/O), process management (synchronization, locking, threads, process), IPC (RPC, shared memory, shared queues, pipes), network access (TCP/IP sockets, HTTP server interfacing, POP/SMTP interfacing). Specific portions will be implemented as needed.

### The Server Application.

The server application 88 is used to start up and shut down all pieces of the binary file delivery server 12, according to the configuration parameters. It also provides the administrative aspects of the server not covered by the Account Manager (46 or 78) or by the Logger 86, such as performance profiling, usage information and server parameters/configuration.

Figure 8 provides a block diagram illustrating of the architecture of the store 42. A store manager 92 is used to maintain global state, to synchronize access to the store 42 and to provide housekeeping functions. A store item manager 94 is used to maintain the state, locks, and cache mechanism of a store item 48. A store event manager 96 is used to maintain listener lists and event filters, as well as to dispatch events according to event filters and event priorities.

Figure 9 illustrates how the user session organizes internet clients into three layers, including sessions, transactions, and transports. The session manager 102 maintains all the currently active session states and performs the session-related housekeeping. It processes transactions coming from transaction managers 108 through the uses of the store 42 and the account manager 46. The transaction manager 108 receives raw data from the transport managers 114, 118, and performs validation and preprocessing using one or more BFD transaction interpreters 110 or HTML transaction interpreters 112. The transaction manager 108 then submits the data to the appropriate BFD session manager 104 or HTML session manager 106, waits for an answer, and then passes the answer back to the appropriate transport manager 114 or 118.

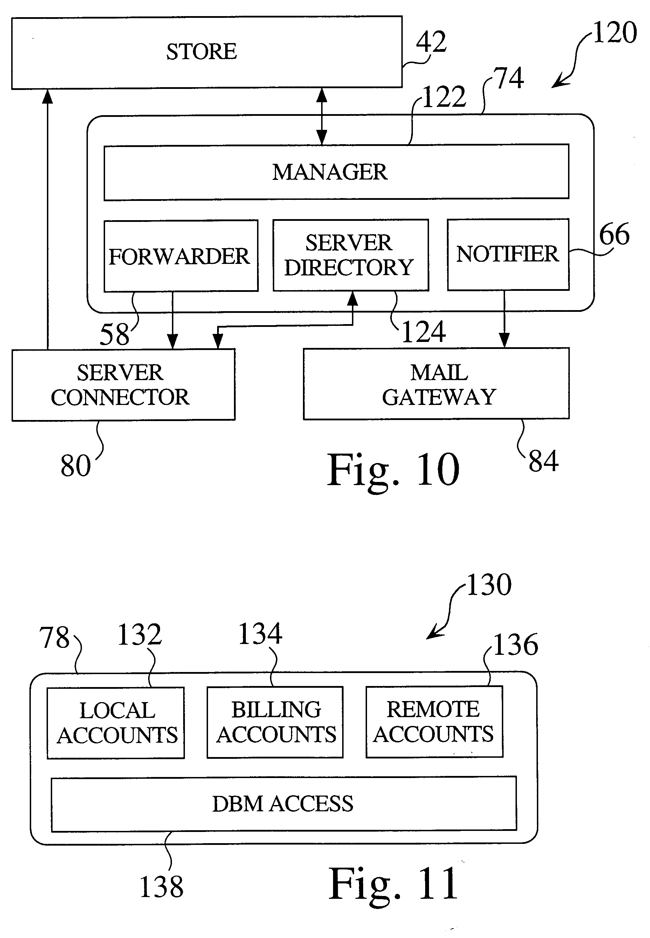

Figure 10 illustrates the non-interactive tasks 120 of a delivery, once the send session has created a store item 48 or another server 12 a-n is forwarding a store item 48. The delivery manager 122 listens to relevant store events, makes a forwarding decision, and coordinates work with the notifier 66 and the forwarder 58. The server directory keeps track of the association between E-mail domains and server domains. The notifier 66 is used to handle E-mail notification 20 to the recipient 22. The forwarder 58 is used to forward store items 48 to other servers 12a-n, using a server connector 80. Since not all E-mail notifications may be received, an E-mail scanner is used to check the server mail account for 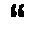 returned 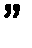 E-mail, and then to match it with the failed transaction.

Figure 11 provides details of the account manager architecture 130. The account manager 78 is used to maintain user account states 132 for the local server 12, to maintain billing account states 134 for the local accounts 132, to query local accounts 132, and to maintain a directory of remote accounts 136. The primary goal of the remote account directory 136 is to associate E-mail addresses with either BFD accounts or non-BFD accounts.

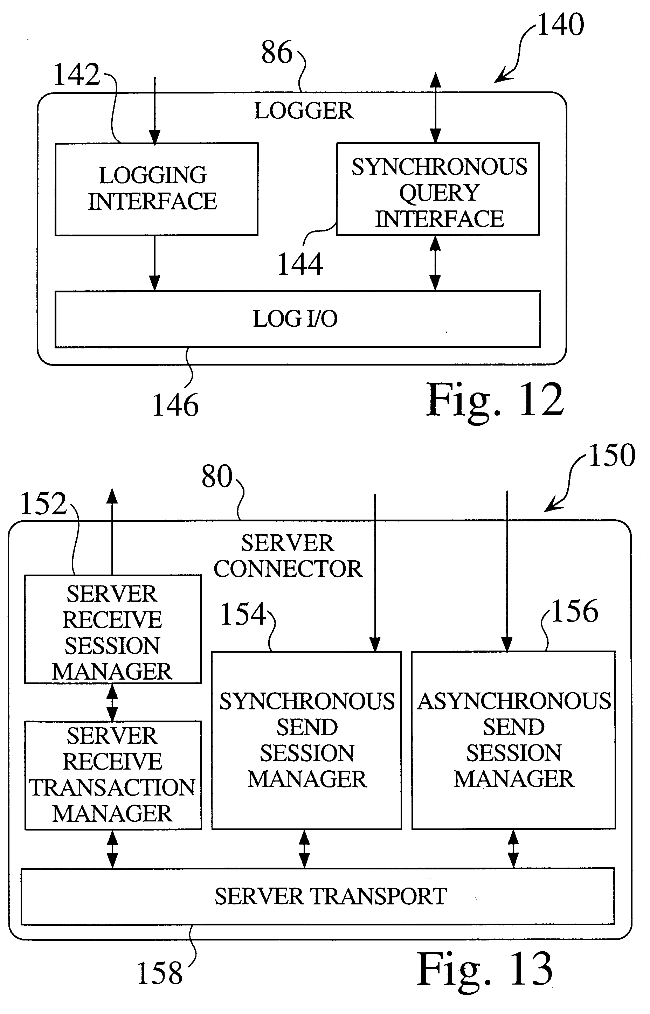

Figure 12 provides details of the logger architecture. Figure 13 provides details of the server connector architecture.

### System Operation.

The following example illustrates how the binary file delivery system 10 is used to distribute electronic information from a sender 16 to a receiver 22. A hypothetical publisher, Sam in Redwood City, California, wishes to send a document to an associate, Rob, in Tokyo, Japan. The following progression of events illustrates how this is achieved, in a controlled fashion.

### Sam connects to a local server in Santa Clara, California.

Sam's BFD desktop opens a connection to a local server 12a in Santa Clara, where his user account resides. The session manager 102 queries the account manager 78 to validate the user 16 (Sam). The session manager 102 then creates a send session state for the user 16.

### Sam's Send Session.

Sam's BFD desktop sends transaction details, such as the number of files, file size, and intended recipients. The session manager 102 attaches this data to the session state. Then the session manager 102 creates a store item 48 descriptor 36 in memory, and reserves disk space with the store 42, as well as a store item ID. Then the upload starts. The session manager 102 spools the data directly to a file with asynchronous I/O.

When the upload 18 of all of Sam's files is complete, the session manager 102 updates the store item descriptor 36 to the disk asynchronously, and then inserts the store item 48 asynchronously into the store 42.

The session manager 102 answer's Sam's upload with an acknowledgement, and provides information regarding the transaction. This session then ends.

### At the Santa Clara Store.

The insertion of the store item 48 is logged asynchronously in the logger 86 by the store 42. The store 42 then runs the store item descriptor 36 against the registered event handlers filters. For each match, it inserts the event and notifiee (Rob) in its event queue. Then that thread dies.

The event dispatch thread pulls the events, and dispatches them asynchronously to the notifiee at rate, depending on the tuning parameters of the system.

### The Santa Clara Delivery is Notified.

The delivery 74 is notified of a relevant event and starts a thread which waits on the lock of the store item 48 via a synchronous transaction with the store 42. Once the lock is secured, the thread reads the store item descriptor 36, and the delivery manager 74 analyzes it, to decide how to handle it. It turns out the recipient 22 is in the Japan domain, where another BFD server 12n is located. The delivery manager 74 found this out by querying a server directory 124. The manager then decides to forward the store item 48. The forward manager 80 asynchronously asks the Connector 80 to do a forward to Tokyo. Then the thread in the delivery dies. Note that the delivery does not know about the server protocols.

The Santa Clara Connector 80 is going to forward the Tokyo Connector 80. A thread handling the delivery request is eventually started in the Connector 80. It knows the host, and has a lock on the store item 48. It initiates the connection with the Tokyo server 12n. If it cannot connect, it goes to sleep for a while. Eventually, the connection opens, and the connector 80 enters the protocol interpreter, which eventually transfers the store item descriptor 36 and the associated binary data files 34. Then it closes the connection and logs a successful forward to the Tokyo server 12n in the logger 86. Then the connector 80 releases the lock on the store item 48 in the store 42 after having marked it as forwarded.

On release of the lock, the store 42 runs the store item descriptor 36 against the event filter list and finds an event filter that is handled locally. A successfully forwarded store item 48 causes a reference count decreased by 1. In this example, there is only one recipient 22, which means the count goes to zero. Therefore, the store 42 can move the store item 48 to a deletion list. A housekeeping thread of the store 42 will then purge the Store Item 48 at some point.

A thread in the Tokyo connector receiver 80 is begun, to handle the connection. Once the protocol interpreter understands it as a forward, it asks the store 42 for a store item ID 36 and the respective committed storage space. The actual store item descriptor 36 and files have been written to disk as it was receiving the data.

Once the connection is complete, the store item 48 is inserted asynchronously into the store 42 of the Tokyo binary file delivery server 12n.

### Tokyo Delivery Component begins.

The Tokyo store 42, on insertion, has generated an event which is going to be handled by a thread of the delivery. It has also logged the insertion of the new item in the logger 86. The manager 102? in delivery 74 realizes this has been forwarded, and that it will be received from this server 12n.

The server 12n queries the account manager 78 to see if there is an account associated with the E-mail address of Rob. If there is no associated account with Rob E-mail, then an E-mail is sent to Rob, with an URL which indicates the store item ID 36. It also queues an asynchronous request for the connector 80 to notify the Santa Clara server 12a that Rob has been notified. If Rob has an account here, then the delivery puts an asynchronous update request with the account manager 78 to mention the pending delivery; in this case the scenario is continued.

### Rob connects to the Tokyo Server to check on new documents.

When Rob opens its receive session, the session manager 102 synchronously checks the Rob account for validity, and in the process it updates the session state, to remember that the account is flagged with a pending receive. The BFD desktop of Rob eventually asks for the document to be received. The session state has the answer and says yes.

The Rob desktop 170 asks for the receive, and the session manager 102 synchronously asks the store 42 for the lock on the relevant store item 48. Once granted, it can answer by sending the first portion of data. Once the document is downloaded, it asynchronously logs a successful receive with the logger 86. Then it puts an asynchronous request with the Connector 80 to notify the Santa Clara server 12a of the final delivery.

At the receive session in Tokyo, the session manager 102 releases the lock, and puts an asynchronous delete request to the store 42. The Rob receive session then terminates. The connector 80 in Santa Clara runs the protocol interpreter, which says that the notifications must be queued to the logger 86.

### Sam checks on Status.

Sam connects to do a receive session followed by a maintenance session. The maintenance session 72 receives a request to check on the status of the sent document. The maintenance session 72 synchronously submits a query to the logger 86 using the store item ID 36 that was passed down to the Sam desktop at send time. The query returns the lists of matching records, which are processed and passed back to the desktop, which can then update the user interface 16.

### Portable Document Delivery System.

Electronic portable documents are becoming increasingly popular. These files can be distributed to different platforms without losing their original look and feel. Adobe Systems' Acrobat PDFT™ and Novel's Envoy™ portable document formats have come into widespread use. In a preferred embodiment of the invention, a portable document delivery system 160 achieves a universal solution to the delivery of electronic documents, by applying portable document technology to the Internet. The portable document delivery system 160 provides complete compatibility with portable electronic document formats, including Novell's ENVOY™ and Adobe System's PDFT™ formats.

Recipients 22 of portable documents from the portable document delivery system 160 can view, search, print, archive, or export information from their documents. Documents distributed using Envoy™ or Acrobat™ in conjunction with the portable document delivery system 160, preserve complete visual fidelity and may be produced on high resolution output devices with the highest level of quality and resolution. Portable document formats allow preserve content and color of the information within a document, and many formats allow indexing, searching, and hypertext linking, while allowing the file to be stored in a compact manner.

Figure 14 is a functional block diagram which depicts a portable document delivery system 160a using a binary file delivery server 12. Figure 15 provides a functional block diagram depicting a portable document delivery system 160b using two binary file delivery servers 12a and 12n communicating over the Internet.

To address the limitations of the Web and electronic mail, in addition to providing additional services, the portable document delivery system 160 includes server software which runs on top of existing electronic mail, http server software, and database systems. Thus, the portable document delivery system 160 combines industry standard solutions for the electronic mail, Web, and database to enable corporations and users to direct the delivery of documents to recipients.

The following disclosure elaborates on the requirements for a universal document delivery solution, as well as the specific components of the portable document delivery system 160.

The portable document delivery system 160 combines three basic components to provide a solution to universal document delivery.
1) Portable Document Send Client. A portable document send client (PDSC) 192 integrates all desktop applications 190 directly with the portable document delivery system 160. The PDSC 192 is not required for all embodiments of the invention. Publishers who simply wish to leverage the BFD server 12 directly are free to do so. The PDSC 192 is intended for the standard corporate computer user who requires a point-to-point to the delivery problem.
2) Binary File Server. The binary file delivery server 12 works on top of Internet standards to deliver documents to recipients. The BFD server 12 can be invoked transparently through the portable document send client (PDSC) 192, or can be invoked and customized directly using a server configuration user interface 198.
3) Portable Document Receive Client. The portable document receive client (PDRC) 194 is the software component which recipients 22 of documents utilize to receive, view, and print documents. Recipients 22 who do not have the PDRC software 194 will be given links to access the software directly over the Internet. In most cases, the PDRC 194 will behave simply as a Netscape NAVIGATOR™ Plug-in or a Microsoft ActiveX™ control or a Java Applet, thus directly integrating the PDRC 194 with the recipient's existing browsers.

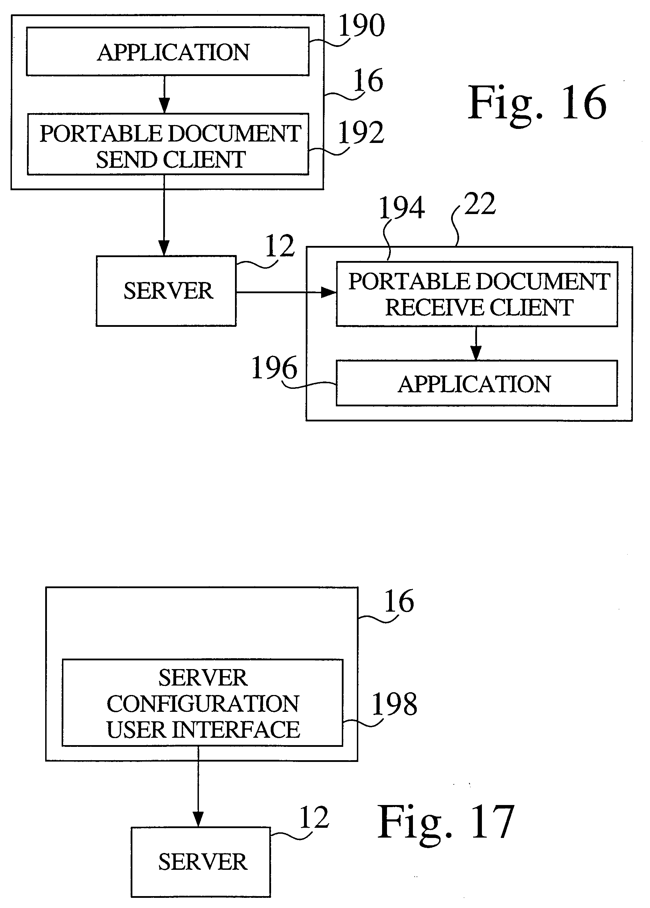

Figure 16 illustrates how a portable document send client application and a portable document receive client application are used in the invention. Figure 17 illustrates how a server configuration user interface application is used in the invention.

### Portable Document Delivery System Requirements.

At the most basic level, a document delivery solution must enable documents to be directed to customers by the producers of those documents, or 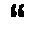 pushed. 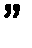 The portable document delivery system 160 is designed so that different types of recipients operating on different computer systems, with different operating systems, E-mail systems, and document types can all benefit from receiving, reading, and using electronic portable documents. The various design parameter categories that the portable document delivery system 160 is adapted for includes primary computer systems (*e.g.* PCs, Workstations, Servers), primary operating systems (*e.g.* Macintosh, Win 3.1, Win '95, NT, Unix, OS/2), electronic mail systems (*e.g.* Microsoft, cc:Mail, Groupwise, Notes, Eudora), document types (*e.g.* paper, Postscript, Quark, WordPerfect, Excel), and user types (*e.g.* MIS, Legal, Financial, Consumers/Home, MarketingCommunication (MarCom)).

A unique aspect of the portable document delivery system 160 is the level of compatibility the solution provides with all computer systems, operating systems, electronic mail systems, and document types. In one embodiment of the invention, the sender 16 and the receiver 22 of a document are both connected to the Internet. In a preferred embodiment of the invention, the portable document delivery system 160 provides not only an Internet delivery solution, but also backward compatibility with facsimile machines 172 and printers 178, as well as forward compatibility with future distribution print architectures.

### Universal Delivery.

Delivery solutions must enable users to distribute documents to anyone, which requires support for a variety of computing platforms, compatibility with facsimile 172, and compatibility with future distributed printing architectures. The portable document delivery system 160 can support the conversion and delivery of complex postscript files. Documents can be delivered to any recipient 22 who has an E-mail account and access to the Internet, regardless of the recipient's platform or E-mail system.

### Security.

Typical applications of document delivery require complete security from the origin of the document complete to the destination. This requirement becomes more pervasive as documents begin to travel across open and wide area networks. The portable document delivery system 160 employs several levels of security. The Portable Document Send Client 192 authenticates and creates a secure socket to upload information to the server 12. Thus, non-BFD servers cannot intercept documents. Additionally, The PDSC 192 allows the sender 16 to use private and or public encryption to guarantee that only the intended recipients of a document can access those documents. Even in cases where encryption is not used, the portable document delivery system 160 includes sophisticated algorithms to prevent unauthorized users from accessing documents.

### Account Management Services.

In many instances, document delivery applications cater to businesses where each sender 16 or recipient 22 of a document must be maintained.

Consider the case of periodically delivering the documents to the same group of a hundred thousand recipients 22. The sender 16 of the document requires tools to update and manipulate the database of the large subscription/ distribution base.

The portable document delivery system 160 enables publishers 16 to create accounts on BFD servers 12 and then associate transactions with specific accounts 132, 134, 136. The system also enables publishers to consolidate several user accounts into a single billing account 134. Additionally, it allows publishers to associate a specific billing code with transactions which may be consolidated in transaction reports. For example, a law firm could create an account and then a billing code for each client, associating a billing code and account with each document's transaction. The portable document delivery system 160 maintains and updates the account information automatically. A portable document delivery system 160 reporting engine then allows the user to create a report for a given account or for a specific billing code. Such a scheme facilitates client management as well as billing.

### Transaction Management Services.

Related to account management is the requirement of transaction management. Not only is it necessary to maintain the database of senders 16 and recipients 22 of documents, it is also necessary to provide services to manage the transaction of sending documents. For example, a sender 16 may want to know if the document was actually delivered and actually received, and perhaps who received the document. In many instances, the publisher 16 would like to charge postage for delivery and will therefore require services to maintain and update accounting information associated with the delivery transactions.

The portable document delivery system 160 is able to create logs associated with each send transaction, and maintain these logs. Each transaction, or document send operation is associated with a specific account. Users 16 can query transaction information directly from the server.

### Reporting.

Account and transaction management provides no value unless sophisticated means of reporting are provided. For example, users 16 can be provided with a full report of a given transaction, including such information as which documents were delivered to whom, how many users have confirmed delivery of the document, or for billing purposes, the costs associated with the transaction.

### Scalability and Bandwidth.

Because of the large scope and application of document delivery applications, the portable document delivery system 160 is capable of expanding its capabilities to service millions of documents or recipients 22. Several aspects of the delivery process occur in real time, while other aspects may be deferred or scheduled. In many cases, the portable document delivery system 160 dynamically extends the amount of bandwidth or sets of servers 12a-n deployed to achieve the necessary throughput for document delivery.

The portable document delivery system 160 is scalable to conform with user requirements. The server software is designed to support the sending of millions of documents per day, and is able to exploit whatever bandwidth has been dedicated to a given server. For example, one current BFD server 12 effectively utilizes 10 Megbit/second bandwidth. The various processes running on BFD servers 12 operate asynchronously, thus allowing for optimal performance on multi-processing servers 12, as well as sophisticated scheduling of the servicing of a given transaction. Special care is taken to operate in real time, particularly for the access of documents from the server 12 by recipients 22.

BFD servers 12 can also distribute work loads across other servers 12a-n. A preferred embodiment of the invention allows individual processes running on a single server 12 to be distributed across a collection of servers 12a-n. In this embodiment, account management processes could run on one server (*e.g.* 12d), while the logging, reporting, transaction management, send, propagate, and retrieve processes run on another server (*e.g.* 12h).

### Portable Document Send Client Specification.

The Portable Document Send Client (PDSC) 192 allows any computer user to distribute documents directly from the desktop of any personal computer, such as a PC or Macintosh computer. The PDSC 192 integrates directly with all applications 190 through the uses of virtual printer devices, thus enabling the PDSC 192 to be compatible with all applications 192 and formats. Importantly, because the PDSC 192 is integrated directly with portable document technology, the sender 16 of a document need not make assumptions about the capabilities of the intended recipient 22 of the document.

The PDSC 192 allows two primary modes of usage: print or 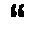 drag and drop 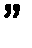 . By print, a sender 16 can simply select the print option from any application 190 and trigger the sequence of events to generate a portable document, and then address and send that document. From the user's perspective, they simply select the print command and are then prompted for the destination of the document using standard addressing interfaces and address books. A Microsoft Mail™ user, for example, would be prompted with the standard Microsoft Mail™ addressing dialogs to direct where a document may be sent. After selecting the destination of the document, the PDSC 192 automatically connects to a BFD server 12 and securely uploads the documents 166 and the intended list of recipients 22, as well as any other attributes selected to customize the send. 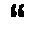 Drag and Drop 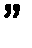 usage allows users 16 to avoid launching applications and printing to send documents; the document may simply be dropped on a PDSC 192 send icon, which is accessible from the sender's desktop 164.

Additional functionality and customization is one click away. During the addressing process, users 16 are free to customize the options of their send by invoking advanced options. By default, each send will reuse the existing parameters for sending documents. Users 16 can also use the advanced options user interface 193 to customize their delivery options, including, for example, security options and receipt requirements. For example, if the user 16 desires to customize the security options, including private and or public key encryption, the user simply checks a 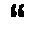 Public Encrypt 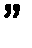 or 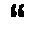 Private Encrypt 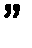 option. Similarly, the user can select the 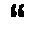 Notify on Receipt 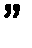 option, thus informing the BFD server 12 to confirm delivery when the document is actually received.

### BFD Server Configuration Options and User Interface.

The BFD Server 12 can be configured and customized directly from a sender desktop 164. The access to the BFD server 12 from the desktop is achieved using an HTML forms user interface. This user interface exists to give server administrators access and control over the advanced options of the BFD server 12. For example, a server administrator might update the database of the 100,000 recipients who are intended to receive a specific document, and then directly invoke the send of the document to those recipients. The server administrator might generate a report regarding the send transactions which occurred during the previous week.

To access the BFD server 12 from the desktop 166, a user 16 must have a special account created on the BFD server 12, which is created ahead of time by the BFD server 12. Additionally, accessing the BFD server 12 over this account requires several layers of authentication and security, thus preventing unsolicited access.

The Server Configuration User Interface 198 allows the user 16 to access and control the server settings, which may include transaction management, account management, reporting facilities, direct upload and download of documents to distribute, direct manipulation of recipient lists, and direct access to send options.

### Portable Document Receive Client.

The recipient 22 of a document can utilize the portable document receive client (PDRC) 194 to access and manipulate documents which were sent to the recipient 22 by the portable document send Client 192 or by the BFD server 12 directly via the BFD server administrator. In the event that the recipient 22 of a document does not already have a PDRC 194, the software may be downloaded and installed directly from the Internet. The architecture of the portable document delivery system 160 simplifies this process, and employs dedicated software and scripts, in addition to advents in new browser architectures to- enable first-time recipients 22 to be one click away from accessing the necessary software to receive documents.

The most basic case of the portable document receive client 194 can simply function as browser extension, such as a Netscape NAVIGATOR™ plug-in or a Microsoft ActiveX™ control. For other users, the PDRC 194 will behave as a stand alone application which works as a helper application.

A third application exists for portable document delivery system 160 customers who prefer direct access to the portable documents from the recipients desktop 170. In this configuration, a dedicated portable document receive client 194 can be downloaded directly from the Internet. This component will continually monitor the activity of the portable document delivery system 160, and will automatically extract any incoming portable documents from BFD servers 12, and open them for immediate document communication on the computer desktop 170 of the recipient 22.

Recipients 22 of portable documents from the portable document delivery system 160, depending on the send configuration options, will be allowed to view, search, print, archive, or export information from their documents. Documents distributed using Envoy™ or Acrobat™ in conjunction with the portable document delivery system 160 will preserve complete visual fidelity and may be produced on high resolution output devices with the highest level of quality.

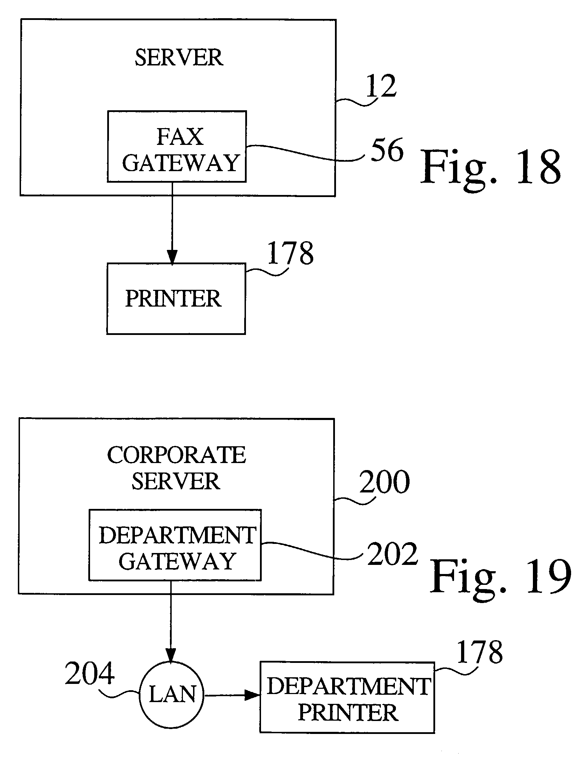

Figure 18 illustrates how a document can be sent by the fax gateway 56 of a BFD server 12 to a printer 178. Figure 19 illustrates how a document can be sent by the department gateway 202 of a dedicated corporate BFD server 200 through a LAN 204 to a department printer 178.

Although the electronic document delivery system and its methods of use are described herein in connection with use in the Internet, the invention may be applied to any of a wide variety of networks, including internets, intranets, LANs and WANs, or any combination thereof, as desired. As well, the invention may be applied to a wide variety of computer platforms, communication protocols, portable document formats, or any combination thereof, as desired.

### Internet/Intranet Security.

The invention also provides a method and system for sending documents through a series of firewalls and/or proxy servers. Firewalls and proxy servers block the distribution of virtually all types of data from a desktop computer to an internet server. However, firewalls presume that Hypertext Transfer Protocol (HTTP) for textual data is a valid operation that allows users to fill in Hypertext Markup Language (HTML) forms. Thus, firewalls do not block HTTP for textual data. The invention circumvents the security provided by firewalls by using this feature of HTTP to move a document through the firewall.

The invention delivers binary data from a desktop computer inside an intranet across a series of firewalls and/or proxy servers to a server residing on the internet. The data, once resident on the internet server, may then be forwarded directly to a receiver, such as other internet servers, internet desktop computers, printers, or fax machines.

Various techniques are employed to implement firewalls and proxy servers. For example, dedicated hardware or software may be used to block various Telecommunications Protocol/Internet Protocol (TCP/IP) ports. Software may be used to analyze the type of information being sent and block, for example, "bad" information. However, for an intranet user to access the Internet, HTTP -- the most basic protocol for accessing Internet information --must be available. HTTP for textual data is presumed to be a valid operation that allows users to fill in HTML forms. Thus, the various firewall and proxy server schemes do not block HTTP.

The primary purpose of HTTP is to "pull" information across the Internet. An HTTP server is given the address of a file, known as a Uniform Resource Locator (URL) and the server returns the data referenced by that URL. However, HTTP also supports 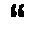 pushing 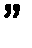 information across the Internet. For example, many HTML pages include a form into which a user inputs data and to send to the server. Such form is used, for example, to request a search of the Internet. In this instance, HTTP pulls information from the server to the user to access the form. HTTP then pushes the data input from the form from the user to the server.

Since HTTP is seldom, if ever, blocked (particularly for small textual data), and can be used to push and pull information, HTTP can be used to circumvent most firewalls and proxy servers. A user is thereby able to send binary data from a desktop computer on an intranet to the Internet. While the preferred embodiment of the invention sends documents from an intranet to the Internet, one skilled in the art will readily appreciate that the teachings of the invention can also be applied to other electronic communications networks, such as a wide area network.

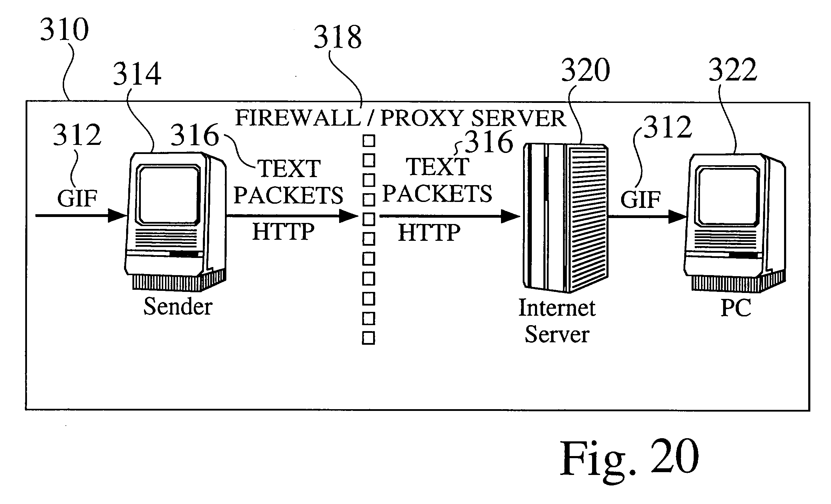

Fig. 20 is a schematic diagram of the system 310 for transmission of data across a firewall and/or proxy server, according to the invention. A document or file, such as a GIF format image file 312 is stored in a computer 314 that resides in an intranet system. The intranet is protected by one or more firewalls and/or proxy servers 318. In the preferred embodiment of the invention, the computer is a desktop computer. However, in alternate embodiments of the invention, the computer is a server computer.

Some firewalls and proxy servers block HTTP push for non-textual data. Additionally, certain firewalls and proxy servers block HTTP push based on the size of the data. For example, a typical form does not include a significant amount of information to be sent to the server. Thus, the HTTP push size may be restricted to the amount of textual data required, for example, to complete an HTML form.

In the preferred embodiment of the invention, therefore, the sending computer also encodes the binary data to be sent as text, for example using a base-64 encoding. If HTTP push is blocked based on the size of the data, the sending computer will also break the data into smaller packets to comply with the size restrictions. Thus, a binary file is converted to text and broken down by the sending computer into small "test packets" 316.

The client then sends these text packets through one or more firewalls and/or proxy servers 318. The software running on the machine of the sender which attempts to deliver the file across the firewall/proxy server will be referred to as Send Client. The text packets are received by a server 320 outside the firewall which has been configured to accept the text packets. The server reassembles the text packets and converts the text back to the native, binary representation for the GIF file 312.

The binary data or file is then sent to the intended Recipient. The invention's use of a server to reassemble the file is advantageous as the receiving device is not required to have such capabilities. Thus, the Recipient may be a desktop computer 322 connected electronically to the Internet (or another wide area network), or may in fact be a device, such as a printer, fax machine, or a personal digital assistant.

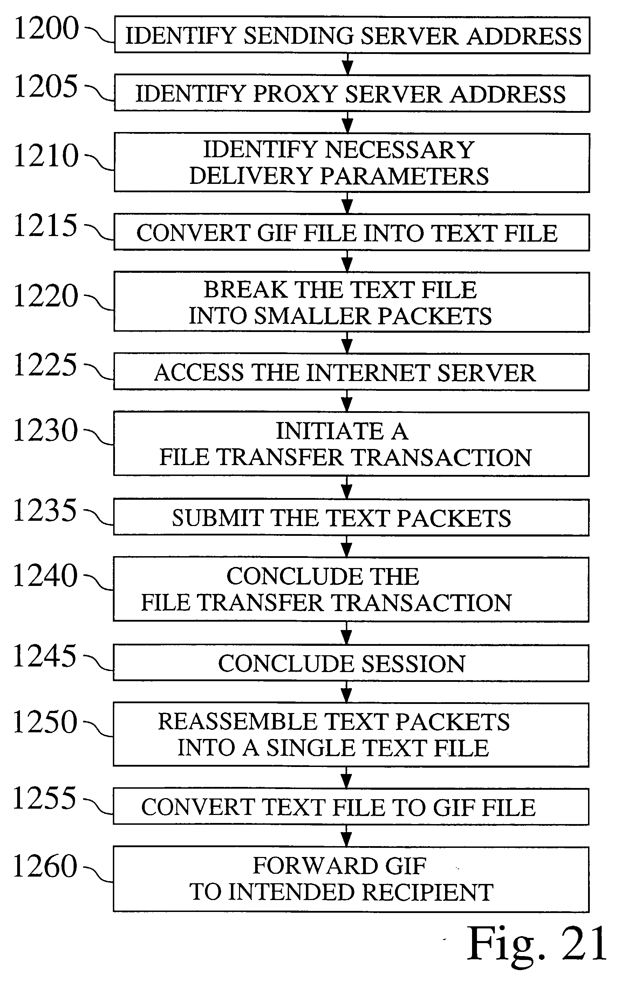

Fig. 21 an exemplary flow chart illustrating the algorithm for transmission of data across a firewall and/or proxy server, according to the invention. In this example, a GIF file in its native binary representation is being sent from a desktop computer to another desktop computer. The sending computer resides inside an intranet which is protected by one or more proxy servers and firewalls. The receiving computer is connected to the sending computer by the Internet via a server running on the Internet.

The firewall may be, for example, a router configured to filter packets, or a dedicated firewall machine. A proxy server may be running in addition to the presence of the firewall. The sending computer forwards the GIF file to the server on the Internet through the firewall and proxy server using the following algorithm.

The sending Computer first identifies the address of the Delivery Server residing on the Internet (or wide area network) which will deliver the file (1200). The Delivery Server acts as a liaison, expediting the delivery between the Send Client software and an intended Recipient. In the preferred embodiment of the invention, the Delivery Server software which intercepts the text packets and constructs the native file runs on a dedicated Delivery Server. However, in an alternative, equally preferred embodiment, the Delivery Server software runs directly on the recipient's intranet system, thereby negating the need for a liaison.

Next, the sending computer identifies the address, if it exists, of the proxy server which will intercept all requests to send or retrieve information to or from the Internet server (1205). The sending computer must also identify any necessary delivery parameters (1210). The sending computer must provide this information to enable HTTP access.

The Send Client software will often require predefined configuration settings to specify the type of transaction to initiate and to identify the necessary parameters specific to that transaction to communicate to the Delivery Server. For example, the parameters for a file transfer transaction include the name of the file, the size of the file, and the type of file. Other delivery parameters include the IP of the Delivery Server, the IP of the proxy server if one exists, any account information specific to the proxy server, such as an account name and password, and any account information required to create a session (or log in) to the Delivery Server.

The sending computer next converts the file, for example a GIF file, into an text file (1215). In the preferred embodiment of the invention, the sending computer uses a base 64 ASCII (text) encoding to generate the non-binary representation of the file. However, any other appropriate encoding method may also be used.

For those firewalls or proxy servers that block not only the type of data or packet, but also the size, the ASCII text representation of the data must be subdivided into an ordered list of smaller text packets (1220). For example, a file of 20K in binary form, may grow to 30K once converted to ASCII. Using a fixed packet size of 4K would yield eight packets to transfer from the Send Client to the Delivery Server, the last packet requiring only 2K.

The sending computer accesses the Internet server either directly, or via the proxy server, if one exists, using HTTP (1225). A session between the client and the server is thereby initiated. Referencing the established session, the sending computer then initiates a file transfer transaction with the Delivery Server (1230).

The Delivery Server and the Send Client software residing on the sending computer are connected via a bidirectional communication link or pipe called the HTTP Conduit. HTTP is primarily a unidirectional protocol, enabling a user to retrieve a file from a server by presenting the server with a URL. The server responds by transmitting the file back to the user. HTTP, however, also enables the user to send information to the server itself, for example, to fill out forms, and hence is bidirectional. This capability is referred to as the HTTP POST method. The HTTP POST method permits the HTTP protocol to become bidirectional, allowing information to flow both to and from the Send Client and the server.

Delivery Protocol is the protocol which is built on top of the HTTP Conduit to enable and facilitate binary data delivery from a Send Client to a Delivery Server. All Delivery Protocol communications between the Send Client and the Delivery Server occur inside an HTTP POST. The HTTP POST is the conduit that allows the Delivery Protocol to send information to the Delivery Server. Each time the Send Client interacts with the Delivery Server, it initiates an HTTP POST operation by asking for a local URL on the Delivery Server, and then sending data back to the Delivery Server via the POST operation.

The bidirectional conduit between the Send Client and the Delivery Server uses the following HTTP interaction:
(1) the Send Client ask Delivery Server for local URL via HTTP;
(2) the Delivery Server returns an acknowledgment message to the Send Client; and
(3) the Send Client uses HTTP POST to forward data to the Delivery Server. This data is the protocol used to interact between the Send Client and the Delivery Server, which in turn may periodically include any binary data which the Send Client desires to transfer to the Delivery Server.

In instances where a proxy server exists, the communication between the Send Client and the Delivery Server may be indirect and would in such cases go through the proxy server.

It should be appreciated that any such mechanism on top of HTTP may be used to implement this invention. Further, any protocol, in addition to HTTP, which is not blocked by this firewall/proxy server, and which suppports unidirectional communication, could be used to implement this invention.

Using the HTTP Conduit as an interface between the Send Client and the Delivery Server, the Delivery Protocol specifies the following:

### Sessions.

Sessions identify a unique binding and series of transactions between the Send Client and the Delivery Server. A session is established to commence data transfer from the Send Client to the Delivery Server. To establish the session, the Send Client presents account and other identifying information to the Delivery Server. If the information is valid, the Delivery Server forwards a session ID to the Send Client. This session ID is used to authenticate and identify the session in all subsequent communication between the Send Client and the Delivery Server.

### Transactions.

Once a session has been established, the Send Client can initiate one or more transactions with the Delivery Server, such as the transfer of the all the binary data constituting a given file.

### File Transfer Transaction.

The Send Client specifies the type of transaction to initiate,as well as parameters specific to that transaction. For a file transfer transaction, the parameters include the name of the file, the size of the file, and the type of file. If the specified parameters are valid, the Delivery Server returns a transaction ID. From this point on, the Send Client forwards each text packet to the Delivery Server, referencing both session and transaction IDs. The Send Client also includes a reference to the size of the each text packet. The Delivery Server returns a success code for each packet of delivered data. At the conclusion of a successful data transfer, the Send Client forwards a message to the Delivery Server, and the transaction is terminated. If no other transactions are pending, the Send Client may also terminate the session.

Using the initiated file transfer transaction and the Delivery Protocol, the sending computer submits the text packets to the Delivery Server via the HPPT Conduit over subsequent HTTP requests (1235). The file transfer transaction with the server is concluded (1240), and the session with the Delivery Server is then concluded (1245).

At the conclusion of the delivery transaction and session, the Delivery Server reassembles the text packets into a single text file (1250). The Delivery Server converts the text file to the native GIF file (1255) and forwards the native GIF to the intended Recipient (1260). The native GIF may be forwarded either directly or by reference; that is (for example), an e-mail attachment (direct) or a VRL that is forwarded to the document on a server (reference). Transmission to a facsimile machine or printer is also considered a direct forward (although they are not e-mail attachments).

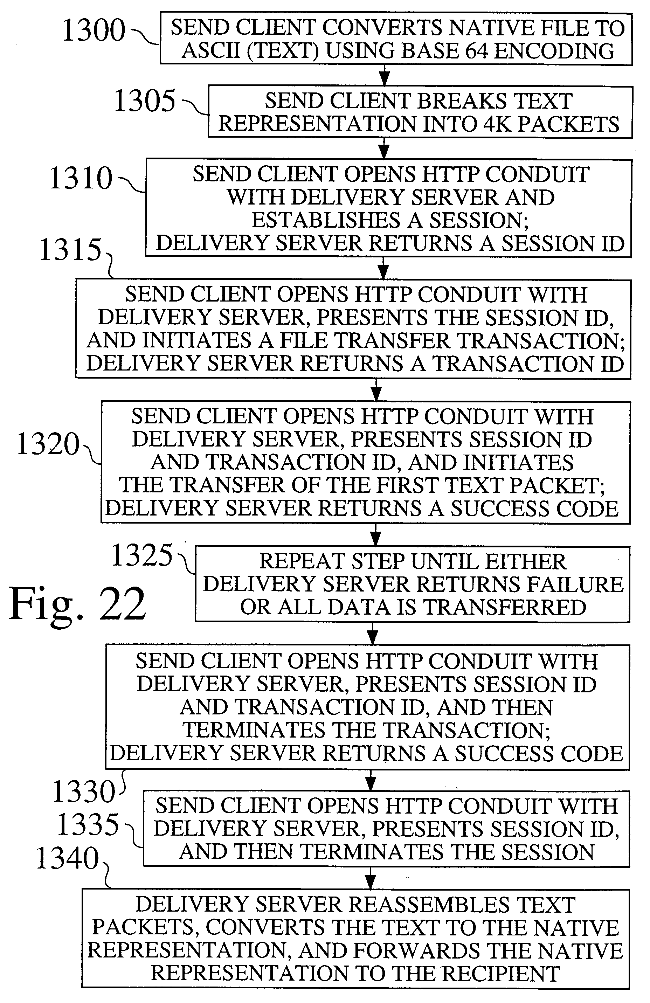

Fig. 22 is an exemplary flow chart of the set of operations necessary to transfer a native file across a firewall and/or proxy server. The Send Client takes the native file and converts it to ASCII (text) using base 64 encoding (1300). The Send Client then breaks this text representation into a series of 4K packets (1305). The Send Client opens the HTTP conduit with the Delivery Server and establishes a session (1310). The Delivery Server responds by returning a session ID.

The Send Client opens the HTTP conduit with the Delivery Server and presents the session ID to initiate a file transfer transaction (1315). The Delivery Server responds by returning a transaction ID. The Send Client then opens the HTTP Conduit with the Delivery Server, presents the session and transaction IDs, and initiates the transfer of the first text packet (1320). Upon receiving the first text package, the Delivery Server returns a success code to the Send Client. This step is repeated until either the Delivery Server returns a failure or all data (all text packets) are successfully transmitted (1325).

The Send Client opens the HTTP Conduit with the Delivery Server, presents the session and transaction IDs, and then terminates the transaction (1330). If the transaction is successfully terminated, the Delivery Server returns a success code. The Send Client then opens the HTTP Conduit with the Delivery Server, presents the session ID, and terminates the session (1335). The Delivery Server reassembles the text packets, converts the text to the native representation, and then forwards the native representation to the Recipient (1340).

The source code for the Send Client and for the Delivery Server software can be readily configured by one skilled in the art using well-known programming techniques and hardware components. Additionally, Send Client and Delivery Server functions may also be accomplished by other means, including integrated circuits and programmable memory devices such as an EEPROM.

The implementation of the binary data firewall delivery solution discussed above with regard to the preferred embodiment of the invention is only one possible implementation. Alternate embodiments may use other implementations consistent with the teachings of the invention.

The invention also provides a technique that defers the decision to descend to a lower level representation, thereby preserving the flexibility to do so at a future point in time, while also enabling a richer set of functions. The dynamic document conversion server, or DDCS, herein disclosed exploits this concept.

### Document Conversion.

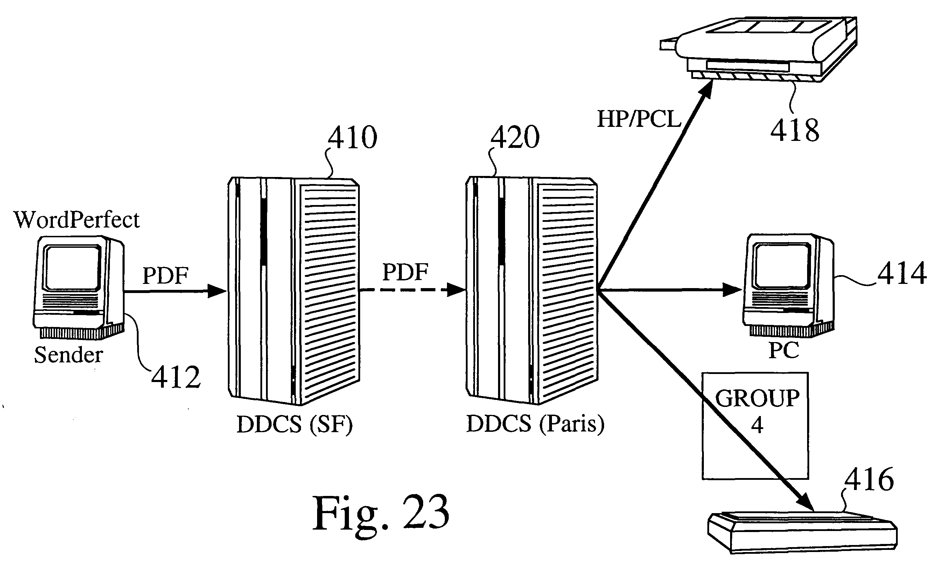

Fig. 23 is a block schematic diagram that shows an example of an application involving a dynamic document conversion server according to the invention. To illustrate and document the architecture of the DDCS, consider an example. Suppose a sender 412 of a WordPerfect document wants to distribute a formatted document to a recipient. Suppose the sender does not know what capabilities the recipient may or may not possess, including whether the recipient is a desktop computer 414, a facsimile machine 416, or printer 418. In such case, the sender could opt to convert the document to a low level representation and then send that representation. However, if the recipient possesses a computer capable of receiving a higher level representation, then the recipient may lose such features of the document as color, scalability, or content. Hence, the premature conversion of a document to a lower level representation limits the flexibility and function for the recipient.

If the sender sends, for example, a portable document representation of the WordPerfect document, thus preserving the document in a high level representation, without offering the capabilities of the DDCS for converting the document and the recipient turns out to be a printer, then the delivery fails.

Neither example above offers an optimal solution -- *i.e.* distributing the best data representation to the recipient, where best is defined as the highest level representation based on the initial format of the data, as well as the capabilities of the recipient.

The DDCS disclosed herein achieves optimal results in this instance. The sender 412 of the document sends data to the recipient via the DDCS server 410, thus introducing a level of indirection between send and receive. The data are delivered from the sender to the DDCS server in a high level representation. The DDCS server may propagate the data, bringing the data closer to the intended recipient. At each step, the DDCS can dynamically convert the data from a high level representation to a lower level representation, based on the data to be delivered and the next server or recipient's capabilities. Ultimately, a terminal DDCS server 420 delivers the document to the recipient, making a final data conversion if necessary.

Suppose in the above example of a WordPerfect document, the sender 412 runs a Macintosh computer with WordPerfect, and the receiver is a fax machine 416. In this case, the sender transfers a high level representation of the WordPerfect document to the initial DDCS server 410. The conversion of the document from WordPerfect to a portable, high level representation, such as PDF, is transparent to the user. Such conversion may be performed by either the sender or by the initial DDCS in any known manner, for example with regard to the PDF format, as is readily offered by Adobe Acrobat. The initial DDCS server accepts the PDF document, and then initiates a transfer to the recipient, based upon standard network protocols.

In this case, assume that the sender is located in San Francisco, while the recipient fax machine is in Paris. The DDCS server forwards the PDF document to another DDCS server 420 in Paris. This second DDCS server then attempts to forward the document to the recipient. At the point of delivery, the second DDCS server learns, via database lookup or interactive dialog with the recipient, that the recipient is in fact a fax machine. The Paris DDCS server then discovers what capabilities the fax machine possesses. In this example, the fax machine supports Group 4 compressed images. The Paris DDCS server then dynamically converts the PDF document to a Group 4 compressed image using known techniques. In this case, Group 4 compressed, black and white, 200 by 100 dots per inch is determined to be the best representation.

Suppose, by contrast, that the Paris DDCS server 420 instead discovers that the recipient is a Hewlett-Packard Color Deskjet printer 418. In this case, the Paris DDCS server converts the document from PDF to the lower level HP Printer Control Language using conventional techniques. Unlike the previous case, the best representation in this case is color, 360 by 300 dots per inch.

Suppose, once more for contrast, the Paris DDCS server 420 discovers the recipient has a personal computer 414 running the DOS operating system. In this case, the Paris DDCS server sends a textual representation of the document to the recipient.

If the Paris DDCS server discovers that the recipient has a personal computer running the Windows operating system, with the Acrobat application installed (a program capable of reading a PDF file), the server forwards the PDF representation of the document.

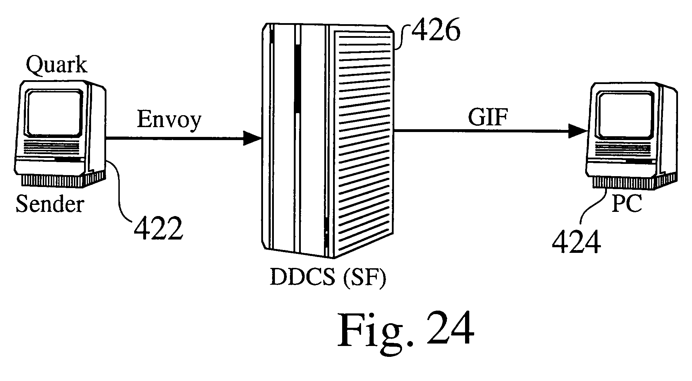

Fig. 24 is a block schematic diagram that shows another example of an application involving the dynamic document conversion server according to the invention. In this case, the sender 422 wants to send a Quark Express document. The same process as discussed above applies here, whereby the document is transparently converted to a high level representation, in this case Envoy, and delivered to the initial DDCS server 426. The DDCS server then delivers the document directly to the intended recipient 424, and does not forward the document to another server. The DDCS server, upon initiating delivery to the recipient, discovers that the recipient does not possess an Envoy application capable of reading the document format, but that instead the recipient is a Web browser capable of reading a GIF bitmap representation of the document. In this case, the DDCS server dynamically converts the high level Envoy representation to the lower level GIF representation, and then delivers the GIF to the recipient.

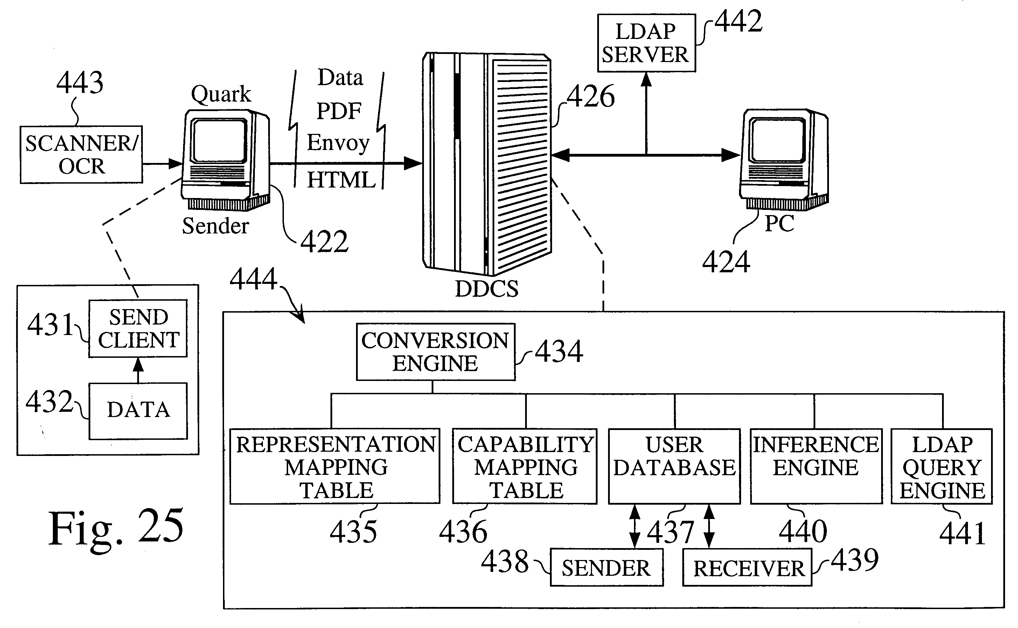

Fig. 25 is a block schematic diagram showing a presently preferred implementation of the dynamic data conversion server according to the invention. The preferred implementation of the DDCS follows directly from the above discussion regarding the design.

In this embodiment of the invention, the sender 422 has a Send Client 431 running on his machine. The invention architecture presumes that the data 432, *e.g.* the document, are in a high level representation, and therefore the data are created on a computer of some form. Note that in the case where the data may start in a low level representation, for example paper, the architecture is still applicable if the sender's computer can convert the representation to a high level representation, for example using optical character recognition technology 443.

The Send Client 431 typically performs an initial conversion of any data to a more malleable, yet high level, representation because proprietary high level formats often are not intended for distribution and conversion, but rather for editing purposes. As such, DDCS servers are more optimal for distributable data representations, including portable documents and SGML derivatives, such as HTML. In one preferred embodiment of the invention the Send Client therefore converts data from a high level, proprietary representation to a high level, portable representation. Arguably, such a conversion represents the first instance when the data conversion drops some of the information and becomes less high level. Typically, the sender uses filtering technology or virtual printer drivers for this purpose. Note that the invention does not require any conversion at the sender (client) level and other embodiments of the invention may defer conversion until the data are delivered to the DDCS server. Accordingly, one novel feature of the invention is derived from deferring the decision of when to convert data to a lower level representation, thus preserving maximum flexibility.

The high level representation in whatever form is then transmitted, for example via HTTP, from the sender's computer to a DDCS server 426. The server then proceeds to deliver the document to the intended recipient 424. The specific delivery mechanism employed can include, for example email, email notification with HTTP delivery (see J. Smith, J.-C. Bandini, *Electronic Document Delivery System*, U.S. patent application serial no. 08/738,966 filed 24 October 1996), direct TCP/IP communication, or fax.

When the server initiates delivery, the server uses a DDCS facility 444 to determine whether to convert the data to be delivered to a lower level representation. The server maintains a series of mapping tables 435, 436 to facilitate potential mapping between representations. An exemplary table 435 includes the possible mapping from a given data representation.

Table 1 provides an example of possible mapping from a given data representation:

**Table 1**

| **Mapping From A Given Data Representation** | |
|---|---|
| **Source Data Representation** | **Possible Mapping** |
| WordPerfect Document | Envoy, PDF, HTML |
| Excel Document | Envoy, PDF, HTML |
| Envoy Document | PDF, PCL, Postscript, Text, JPEG, GIF, Group 4, Group 3 |
| PDF Document | Envoy, PCL, Postscript, Text, JPEG, GIF, Group 4, Group 3 |
| JPEG Image | GIF, Group 4, Group 3 |
| GIF Image | Group 4, Group 3 |
| Group 4 Image | Group 3 |

Another mapping table 436 which the server maintains is the table containing the possible data representations given a specific capability.

Table 2 provides an example of possible data representations given a specific capability:

**Table 2**

| **Data Representations Given A Specific Capability** | | |
|---|---|---|
| **Target Device (Recipient)** | **Capabilities** | **Possible Mapping** |
| Personal Computer | Windows/Netscape 2.0 | Envoy, PDF, HTML, JPEG, GIF, Text |
| Personal Computer | Windows/Netscape 1.1 | HTML, GIF, Text |
| Workstation | Unix/Netscape | PDF, HTML, JPEG, GIF, Text |
| Personal Computer | Windows | Text |
| Printer | Postscript II | Postscript I, Postscript II |
| Printer | Postscript I | Postscript I |
| Printer | PCL 5 | PCL 5, PCL 4, PCL 3 |
| Printer | PCL 3 | PCL 3 |
| Fax Machine | Group 4 image | Group 4, Group 3 |
| Fax Machine | Group 3 image | Group 3 |

Given the above tables which describe possible mapping, the server then must determine the appropriate format for the data to be delivered, as well as the recipient capabilities. Several techniques are employed.

The primary technique for deriving the information regarding the data format to be delivered entails maintaining a data base 437 of capabilities with the server of specific users which have used the server, either to pick up information 439, or to send information 438.

For example, if a sender of information delivered an MS Word document to the server to send the document to a specific recipient, the server now knows that the sender can receive MS Word documents, or similarly, an Envoy or PDF document. The server retains such information in this capability data base 437. When users pick up documents from the server, for example in instances where the delivery mechanism used email notification and HTTP delivery, the HTTP protocol describes recipient capabilities regarding platform and Internet web browser type and version. Such information can be used at this point, but can also be recorded in the capabilities data base for future reference of deliveries that do not involve HTTP delivery, for example.

The server can also use an inference engine 440 to infer recipient capabilities, based on the type of delivery mechanism and the address used to describe the recipient. For example, a telephone number address implies the recipient uses a fax machine. The server can query the fax machine and determine whether the fax machine supports Group 4 or Group 3, for example, and can then update the format accordingly.

The server can also use an LDAP query engine 441 to query recipient capabilities dynamically using the Internet Lightweight Directory Access Protocol (LDAP) standard developed by the University of Michigan in conjunction with the Internet Engineering Task Force. LDAP servers 442 provide directory and other services. The DDCS server queries LDAP servers in real time for capabilities information pertinent to a particular delivery.

Once the data format has been determined, and the recipient capabilities have been identified, the server then uses the mapping tables to conclude whether data conversion is required or appropriate. This determination, in many instances, requires more than mapping table look-ups. For example, multiple mapping are often required to discover the best data representation. Such conversions are performed by a conversion engine 434.

The actual data conversion process goes beyond the scope of this invention, and moreover has been widely available in the computer software industry. For example, it has been known how to convert a PDF document to a Postscript document from the time that Adobe Systems shipped the first version of Acrobat. If an Acrobat viewer is running on a DDCS server, that viewer is instructed to print a document to a particular type of printer if necessary. So, in general, the actual data conversion itself is not directly relevant for this invention, but is rather a matter of choice.

Although the present invention has been described in detail with reference to a particular preferred embodiment, persons possessing ordinary skill in the art to which this invention pertains will appreciate that various modifications and enhancements may be made without departing from the spirit and scope of the claims that follow.

## Claims

1. An apparatus for delivering an electronic document, comprising:
a sending computer (l6)
a receiving computer (22) and
a server (l2) interposed between said sending computer (16) and said receiving computer (22), wherein when said electronic document is forwarded to said server (12) from said sending computer, said server (l2) sends a notification of said electronic document to said receiving computer (22) and wherein said receiving computer (22) downloads said forwarded electronic document from said server.

2. The apparatus of claim l, wherein said notification either contains a URL reference back to said served, is an SMTP based E-mail notification, or contains an HTTP link to said server.

3. The apparatus of any of the preceding claims, wherein when said server sends a notification of said electronic document to said receiving computer (22), said server sends an acknowledgement to said sending computer (l6).

4. The apparatus of any of the preceding claims, wherein when said receiving computer downloads said forwarded electronic document from said server (l2) said server sends an acknowledgement to said sending computer.

5. The apparatus of any of the preceding claims, wherein said electronic document is a portable electronic document.

6. The apparatus of claim 5, wherein said portable electronic document is either in Envoy™ format or in Acrobat PDF™ format.

7. A method for delivering an electronic document, comprising the steps of:
forwarding said electronic document from a sending computer (16) to a server (12);
sending a notification of said forwarded electronic document from said server to a receiving computer (22), and
when receiving computer reguests said forwarded electronic document, delivering said forwarded electronic document from said server to said receiving computer.

8. The method of claim 7, wherein said notification either contains an URL reference back to said server, is an SMTP based E-mail notification, or contains an HTTP link to said server.

9. The method of any of claims 7 or 8, wherein when said server sends a notification of said electronic document to said receiving computer, said server sends an acknowledgement to said sending computer.

10. The method of any of claims 7 to 9, wherein when said receiving computer downloads said forwarded electronic document from said server, said server sends an acknowledgement to said sending computer.

11. The method of any of claims 7 to 10, wherein said electronic document is a portable electronic document.

12. The method of claim 11, wherein said portable electronic document is either in Envoy™ format or in Acrobat PDF™ format.

13. An apparatus for delivering an electronic document, comprising:
a sending computer (16)
a receiving computer (22)
a first server (12a) interposed between said sending computer and said receiving computer,
a second server (12n) interposed between said first server and said receiving computer (22), wherein when said electronic document is forwarded to said first server (12a) from said sending computer (16), said first server sends said forwarded electronic document to said second server (12n), said second server sends a notification of said sent, forwarded electronic document to said receiving computer, and wherein said receiving computer downloads said sent forwarded electronic document from said second server.

14. The apparatus of claim 13, wherein said first server and said second server are interposed across the internet or an intranet.

15. A method for dynamically delivering electronic documents via an electronic network, comprising the steps of:
sending a high level representation of an electronic document to a recipient via a dynamic document conversion server (410),
deferring a decision to descend to a lower level representation;
determining a most appropriate level of representation for said document based upon said recipient's capability to reproduce said document;
converting said document to a lower level representation as appropriate and necessary for said recipient's capability to reproduce said document, and
completing delivery of said document to said recipient.

16. The method of claim 15, further comprising the step of:
converting said document to a portable document representation of said document before sending said document.

17. The method of any of claims l5 to 16 wherein said document is delivered from a sender (412) to said server in a high level representation.

18. The method of any of claims 15 to 17, wherein said server propagates said document via said network, thereby bringing said document closer to an intended recipient.

19. The method of any of claims 15 to 18, further comprising the step of:
dynamically converting said document from a high level representation to a lower level representation, based on the document to be delivered and a next server or recipient's capabilities to reproduce said document.

20. The method of any of claims 15 to 19, wherein a second server then attempts to forward said document to said recipient.

21. The method of any of claims l5 to 20, wherein said document is delivered to an initial server, and wherein said server then delivers said document directly to an intended recipient.

22. The method of claim 21, wherein said server dynamically converts a high level document representation to a lower level document representation, and then delivers said lower level document representation to said recipient.

23. The method of any of claims 15 to 22, further comprising the step of
performing a database lookup or interactive dialog with said recipient to identify said recipient's capability to reproduce said document.

24. The method of any of claims 15 to 23, wherein a sender of said document further comprises a send client.

25. The method of claim 24, wherein said send client performs an initial conversion of said document to a portable representation.

26. The method of any of claims 15 to 25, further comprising the step of:
using a server facility to determine whether to convert said document to be delivered to a lower level representation.

27. The method of claim 26, further comprising the step of:
maintaining a series of mapping tables to facilitate potential mapping between representations.

28. The method of claim 27, further comprising the step of:
providing a table that includes possible mapping from a given data representation.

29. The method of claim 27, further comprising the step of:
providing a table that includes possible data representations given a specific capability.

30. The method of any of claims 15 to 29, further comprising the step of:
deriving information regarding said document format to be delivered.

31. The method of any of claims 15 to 30, further comprising the step of:
maintaining a data base of capabilities with said server of specific users which have used said server, either to pick up documents, or to send documents.

32. The method of any of claims 15 to 31, further comprising the step of providing an inference engine to infer recipient capabilities.

33. The method of claim 32, wherein said inference is based on either or both of a type of delivery mechanism and an address used to describe said recipient.

34. The method of any of claims 15 to 33, further comprising the step of providing an LDAP query engine to query recipient capabilities dynamically using the Internet Lightweight Directory Access Protocol (LDAP) standard.

35. The method of any of claims 15 to 34, further comprising the step of:
determining data format:
identifying recipient capabilities, and
using at least one mapping table to conclude whether data conversion is required or appropriate.

36. An apparatus for dynamically delivering electronic documents via an electronic network comprising a sender (412) for sending a high level representation of an electronic document to a recipient (4l4), 4l6, 4l8) said apparatus comprising:
a dynamic document conversion server (4l0), for forwarding said document to said recipient, said server further comprising:
a facility for determining a most appropriate level of representation for said document based upon said recipient's capability to reproduce said document, and
a conversion engine for converting said document to a lower level representation as appropriate and necessary for said recipient's capability to reproduce said document,
wherein said server defers a decision to descend to a lower level representation as appropriate.

37. The apparatus of claim 36, further comprising a send client for converting said document to a portable document representation of said document before sending said document.

38. The apparatus of any of claims 36 or 37, wherein said document is delivered from a sender to said server in a high level representation.

39. The apparatus of any of claims 36 to 38 wherein said server propagates said document via said network, thereby bringing said document closer to an intended recipient.

40. The apparatus of any of claims 36 to 39, further comprising:
a conversion engine for dynamically converting said document from a high level representation to a lower level representation, based on the document to be delivered and a next server or recipient's capabilities to reproduce said document.

41. The apparatus of any of claims 36 to 40, further comprising a second server that forwards said document to said recipient.

42. The apparatus of any of claims 36 to 41, wherein said document is delivered to an initial server, and wherein said server then delivers said document directly to an intended recipient.

43. The apparatus of claim 42, wherein said server dynamically converts a high level document representation to a lower level document representation, and then delivers said lower level document representation to said recipient.

44. The apparatus of any of claims 36 to 43, further comprising:
an inference engine for performing a data base lookup or interactive dialog with said recipient to identify said recipient's capability to reproduce said document.

45. The apparatus of claims 36 to 44, wherein a sender of said document further comprises a send client.

46. The apparatus of claim 45, wherein said send client performs an initial conversion of said document to a portable representation.

47. The apparatus of any of claims 36 to 46, further comprising a server facility for determining whether to convert said document to be delivered to a lower level representation.

48. The apparatus of claim 47, further comprising at least one series of mapping table for facilitating potential mapping between representations.

49. The apparatus of claim 48, further comprising a table that includes possible mapping from a given data representation.

50. The apparatus of claim 48, further comprising a table that includes possible data representations given a specific capability.

51. The apparatus of any of claims 36 to 50 further comprising a user database for deriving information regarding said document format to be delivered.

52. The apparatus of any of claims 36 to 51 further comprising a database of capabilities of specific users which have used said server, either to pick up documents or to send documents.

53. The apparatus of any of claims 36 to 52, further comprising an inference engine to infer recipient capabilities.

54. The apparatus of claim 53, wherein said inference is based on either or both of a type of delivery mechanism and an address used to describe said recipient.

55. The apparatus of any of claims 36 to 54, further comprising an LDAP query engine to query recipient capabilities dynamically using the Internet Lightweight Directory Access Protocol (LDAP) standard.

56. The apparatus of any of claims 36 to 55 further comprising:
a mapping table for determining data format;
a mapping table for identifying recipient capabilities, and
wherein at least one of said mapping tables is used to conclude whether data conversion is required or appropriate.

57. A method for binary data delivery from an intranet through at least one of a firewall or a proxy server (318) comprising the steps of:
converting said binary data to text at a sending computer (314),
using an unblocked protocol that supports unidirectional communication to push said text across a firewall or proxy server (318) to a server (320) residing on an electronic network,
reassembling said text at said server (320) and converting said text to said binary data; and
sending said binary data from said server to a recipient (322) on said electronic network.

58. The method of claim 57, wherein said electronic network is the Internet.

59. The method of any of claims 57 or 58 wherein said sending computer converts said binary data into text using base 64 ASCII encoding.

60. The method of any of claims 57 to 59, further comprising the step of subdividing said text into text packets.

61. The method of any of claims 57 to 60, wherein said server is a part of said intranet.

62. The method of any of claims 57 to 60, wherein said server is a dedicated server on the Internet.

63. The method of any of claims 57 to 62, wherein said sending computer is either a desktop computer or a server computer.

64. The method of any of claims 57 to 63, wherein said protocol is HTTP.

65. The method of any of claims 57 to 64, wherein said recipient is one of a computer, fax machine, printer, or personal digital assistant.

66. A method for binary data delivery from a sending computer (314), residing on an intranet through at least one of a firewall or a proxy server (318), comprising the steps of:
said sending computer accessing the Internet using HTTP;
said sending computer (314) identifying the address of a delivery server (320), residing on the Internet, said delivery server configured to receive data from said sending computer;
said sending computer (314) identifying any delivery protocols for said delivery server;
said sending computer converting said binary data into text data;
said sending computer subdividing said text data into text packets;
said sending computer accessing the Internet to initiate a session between said sending computer and said delivery server,
said sending computer initiating a data transfer transaction with said delivery server (320);
said sending computer submitting said text packets to said delivery server;
said sending computer concluding said data transfer transaction with said delivery server, and
said sending computer concluding said session with said delivery server.

67. The method of claim 66, further comprising the steps of:
said delivery server reassembling said text packets into a single text file; said delivery server converting said single text file into
said original binary data, and
said delivery server forwarding said binary data to a recipient via the Internet.

68. The method of any of claims 66 or 67 where said sending computer converts said binary data into text data using base 64 ASCII encoding.

69. A system for binary data delivery from an intranet through at least one of a firewall or a proxy server (318) comprising:
a computer for converting said binary data to text data and for using HTTP to send said text data across a firewall or proxy server to an electronic network, and
means for receiving, reassembling and converting said text data to said binary data for delivery to a recipient on said electronic network.

70. The system of claim 69, wherein said means for receiving, reassembling and converting said text data to said binary data is a server (320) residing on said electronic network.

71. The system of claim 69, wherein said means for receiving, reassembling and converting said text data to said binary data is a computer residing on said intranet.
